# EUROPÄISCHE PATENTSCHRIFT

(11) **EP 2 990 750 B1**
(45) Veröffentlichungstag und Bekanntmachung des Hinweises auf die Patenterteilung: **20.03.2019**
(21) Anmeldenummer: 15180541.3
(22) Anmeldetag: 11.08.2015
(51) Int. Cl.: F28D 20/00, C12C 13/02, C12C 7/22

(54) **ANORDNUNG UND VERFAHREN ZUR WÄRMESPEICHERUNG FÜR WÄRMEVERBRAUCHER IN EINER ANLAGE ZUR GETRÄNKEHERSTELLUNG**
ASSEMBLY AND METHOD FOR STORING HEAT FOR HEAT CONSUMERS IN A SYSTEM FOR THE PRODUCTION OF BEVERAGES
AGENCEMENT ET PROCEDE D'ACCUMULATION DE CHALEUR POUR CONSOMMATEUR DE CHALEUR DANS UNE INSTALLATION DESTINEE A LA FABRICATION DE BOISSONS

(30) Priorität: 28.08.2014 DE 102014112366
(43) Veröffentlichungstag der Anmeldung: 02.03.2016
(73) Patentinhaber: Krones AG, 93073 Neutraubling (DE)
(72) Erfinder: FRIEDRICH, Michael, 93073 Neutraubling (DE); KAMMERLOHER, Helmut, 93073 Neutraubling (DE); KUMPF, Christoph, 93073 Neutraubling (DE)
(74) Vertreter: Reichert & Lindner Partnerschaft Patentanwälte

(56) Entgegenhaltungen:
- EP-A2- 0 819 893
- WO-A1-2011/076410
- DE-A1- 19 846 364
- DE-A1-102005 013 314
- DE-A1-102010 042 765
- DE-A1-102012 220 581

## Beschreibung

Die vorliegende Erfindung betrifft eine Anordnung zur Wärmespeicherung in einer Anlage zur Getränkeherstellung. Die Anordnung umfasst einen Wärmespeicher mit einem Speichermedium. Ferner sind der Anordnung mehrere Wärmeverbraucher zugeordnet, die mit dem Wärmespeicher zur Einspeisung und/oder Entnahme von Wärmeenergie verbunden sind. Das Speichermedium ist im Wärmespeicher in mehreren Schichten bevorratet und ist somit in jeweils unterschiedlichen Temperaturbereichen im Wärmespeicher gespeichert.

Ferner betrifft die Erfindung ein Verfahren zur Wärmespeicherung in einem Getränkeherstellungsprozess.

Die thermische Energie stellt in einer Brauerei bzw. in einer Anlage für die Getränkeherstellung einen nicht unerheblichen Kostenfaktor dar. Alle Bestrebungen zielen darauf ab, den Brauprozess bzw. den Getränkeherstellungsprozess mit möglichst geringem Aufwand an Primärenergie zu gestalten. Die Potentiale für Wärmerückgewinnung, speziell im Bereich der Würzeherstellung, sind dabei bereits sehr weit ausgereift, basieren aber in aller Regel auf einer Zwischenspeicherung der Wärme in Form von unterschiedlich heißem Brauwasser beziehungsweise Wärmespeicherwasser (Speichermedium), das unter anderem bei der Würzekühlung gewonnen wird. Verfahrensbedingt kommt es dabei immer zu großen Wärmeüberschüssen in Form von heißem Brauwasser, für die es zunehmend schwieriger wird, eine sinnvolle Verwendung innerhalb des Brauereibetriebs bzw. des Betriebs zur Getränkeherstellung zu finden. Darüber hinaus kann die rückgewonnene Wärme in Form des erwärmten Brauwassers aus hygienischen Gründen nicht beliebig lange gespeichert werden, was sich besonders bei Brauereianlagen mit niedrigen Sudfolgen und längeren Sudpausen negativ auf die Energiebilanz auswirkt. Hierfür technologisches Hintergrundwissen ist beispielsweise in den Druckschriften DE 10 2012 220581 A1, EP 0 819 893 A2, DE 10 2010 042765 A1, DE 10 2005 013314 A1 und DE 198 46 364 A1 offenbart.

Aus dem Fachbuch "Technologie Brauer und Mälzer" von Wolfgang Kunze, erschienen im VLB-Verlag Berlin (10. überarbeitete Auflage, erschienen 2011) ist auf Seite 363 ein Kochsystem mit einem Wärmespeichertank beschrieben. Die Temperaturen im Wärmespeichertank liegen dabei zwischen 78°C und 98°C.

Die deutsche Offenlegungsschrift DE 10 2011 055 146 A1 offenbart eine Brauereianlage und ein Verfahren zur Erwärmung von Brau- und Brauchwasser in einer Brauereianlage. Die Brauereianlage umfasst mindestens ein Maischgefäß, sowie zumindest einem diesem nachgeordneten Prozessbehälter und eine Würzpfanne. Ebenso sind diese Elemente mit einer Brau- und Brauchwasserzuleitung versehen, so dass ein Brauwasserkaltbehälter mit dem Maischgefäß oder einem Vormaischer verbunden ist. Ebenso ist ein Wärmeübertragungsfluidkreislauf vorgesehen, der mehrere Wärmetauscher aufweist. Die Brau-und Brauchwasserzuleitung wird dabei über den entsprechenden Wärmetauscher geführt, aufgeheizt und dem Maischgefäß, oder dem Vormaischer, zugeführt.

Aus der deutschen Offenlegungsschrift DE 2011 055 147 ist ein Verfahren zur Einspeisung von Wärmeenergie in ein in einer lebensmitteltechnischen Prozessanlage zu verarbeitendes Prozessmittel, sowie ein Wärmeversorgungssystem dafür offenbart. Es ist ein Pufferspeicher offenbart, welcher über verschiedene Temperaturniveaus verfügt. Um eine möglichst geringe Vermischung gewährleisten zu können, werden die zuführenden Temperaturniveaus gemessen und in unterschiedlichen Höhen ein- und ausgelagert.

Aus der internationalen Patentanmeldung WO 2011/076410 A1 ist eine Vorrichtung und ein Verfahren zum Rückgewinnen von Energie offenbart. Die Energie wird dabei aus einem heißen Medium, insbesondere heißer Würze oder heißer Maische, für eine Bierbrauerei mit einer ersten Wärmetauschereinrichtung für einen Wärmeträger zurückgewonnen. Die Wärmetauschereinrichtung ist insbesondere nach einer Einrichtung zum Aufheizen, Kochen oder Heißhalten von Würze oder Maische angeordnet und derart ausgebildet, dass unter Abkühlen von vorzugsweise Würze oder Maische der Wärmeträger erwärmbar ist. Mindestens ein Wärmeverbraucher der Brauerei kann mit diesem Wärmeträger beheizt werden. Der beim Erwärmen des Wärmeverbrauchers abgekühlte Wärmeträger kann wieder dem Kreislauf der ersten Wärmetauschereinrichtung zugeführt werden. Es ist ebenfalls ein Wärmespeichertank offenbart, welcher über eine Schichtladelanze verfügt, mit welcher ebenfalls eine Einlagerung im richtigen Temperaturniveau ermöglicht wird.

Aus der internationalen Patentanmeldung WO 2009/062597 ist ein Brauverfahren und eine Brauereianlage offenbart. Die in einem Wärmespeicher gespeicherte Energie wird an einen Wärmeverbraucher abgegeben. Je nach Rücklauftemperatur wird entschieden, ob das Speichermedium direkt in den Wärmespeicher zurückgeführt wird, oder ob es einen weiteren Wärmeverbraucher mit einem geringeren Temperaturniveau zugeführt wird. Dieser weitere Wärmeverbraucher kann dem Speichermedium somit weitere Energie entziehen. Nachteilig hierbei ist jedoch, dass der für die Beheizung eines vorgesehenen Wärmeverbrauchers erforderliche Wärmestrom und auch die Wärmemenge nicht ausreichend hoch beziehungsweise vorhanden ist, so dass keine akzeptable Aufheizrate gewährleistet werden kann.

Der Erfindung liegt die Aufgabe zugrunde, eine Anordnung zur Wärmespeicherung für Wärmeverbraucher bei der Getränkeherstellung zu schaffen, die für die Wärmeverbraucher ein gesamtheitliches Energie-Wärme-Management zur Verfügung stellt und wobei die Vor- und Rücklauftemperaturen des Speichermediums in Bezug auf einen laufenden bzw. nachfolgenden Getränkeherstellungsprozess optimiert sind.

Diese Aufgabe wird durch eine Anordnung zur Wärmespeicherung in einer Anlage zur Getränkeherstellung gelöst, die die Merkmale des Anspruchs 1 umfasst.

Eine weitere Aufgabe der gegenwärtigen Erfindung ist, ein Verfahren zur Wärmespeicherung für Wärmeverbraucher bei der Getränkeherstellung zu schaffen, das für die Wärmeverbraucher ein gesamtheitliches Energie- und Wärme-Management zur Verfügung stellt und wobei die Vor- und Rücklauftemperaturen des Speichermedium in Bezug auf einen laufenden bzw. nachfolgenden Getränkeherstellungsprozess optimiert sind.

Diese Aufgabe wird durch ein Verfahren zur Speicherung in einem Getränkeherstellungsprozess gelöst, das die Merkmale des Anspruchs 10 umfasst.

Die Anordnung zur Wärmespeicherung in einer Anlage zur Getränkeherstellung, insbesondere einer Brauereianlage, zeichnet sich dadurch aus, dass ein Wärmespeicher mit einem Wärmespeichermedium, das bevorzugter Weise Wasser ist, mit mehreren Wärmeverbrauchern in Verbindung steht. Die mehreren Wärmeverbraucher sind zur Einspeisung und/oder Entnahme von Wärmeenergie mit dem Wärmespeicher verbunden. Das Speichermedium selbst ist im Wärmespeicher in mehreren Schichten mit jeweils unterschiedlichen Temperaturbereichen gespeichert. In dem Wärmespeicher können beispielsweise Temperaturen von 70°C bis 150°C vorherrschen. In dem Wärmespeicher sind mindestens drei diskrete Schichten ausgebildet. Der Wärmespeicher selbst ist dabei derart ausgebildet, dass nach Bedarf jede der mindestens drei diskreten Schichten mit einem Belademittel im jeweiligen Temperaturbereich kommunikativ zum temperaturabhängigen Einschichten verbunden ist. Dadurch ist eine obere Schicht mit einem Speichermedium aus einem Wärmeerzeuger, eine Zwischenschicht mit einem Speichermedium aus dem mindestens einen Rücklauf eines Wärmetauschers eines mindestens ersten Wärmeverbrauchers und eine untere Schicht mit einem Speichermedium aus mindestens einem Rücklauf eines Wärmetauschers eines mindestens zweiten Wärmeverbrauchers gezielt beladbar.

Das Belademittel umfasst mindestens eine Lanze, die in der jeweiligen Schicht im Wärmespeicher endet. Die Lanze kann als mindestens eine Schichtladelanze oder als mindestens eine horizontale Lanze ausgebildet sein, womit das Speichermedium in den Wärmespeicher eingeschichtet wird.

Eine weitere Möglichkeit der Ausgestaltung des Belademittels kann sein, dass am Wärmespeicher mehrere Einschichtstellen ausgebildet sind, die in die jeweilige Schicht im Wärmespeicher münden. Selbstverständlich ist es auch möglich, dass beim Wärmespeicher auch eine Kombination aus Schichtladelanzen und Einschichtstellen möglich ist.

In der oberen Schicht des Wärmespeichers herrscht ein Temperaturbereich über der Siedetemperatur des Speichermediums vor. Da es sich bei dem Speichermedium vorzugsweise um Wasser handelt, liegt der Temperaturbereich somit über 100° C. Es ist für einen Fachmann selbstverständlich, dass die Siedetemperatur des Speichermediums von dem Aufstellort über Meereshöhe abhängt. Die Wärmeverbraucher, welche eine Produkttemperatur von >= 95°C benötigen, werden als Hochtemperaturverbraucher bezeichnet. Bei einem Brauprozess für die Bierherstellung sind dies insbesondere die Maische- und Würzekochung bzw. die Würzeheißhaltung. Um das Produkt in diesen Hochtemperaturverbrauchern auf die erforderliche Temperatur von >= 95°C zu bringen, benötigt das Speichermedium ein Temperaturniveau von nahe bzw. über 100°C. Um allerdings den benötigten Wärmestrom bei wirtschaftlich sinnvollen Wärmeübertragungsflächen bzw. Wärmetauschern zu erreichen, werden Temperaturniveaus von bevorzugt über 105°C benötigt. Für die Produktqualität von Maische, Würze oder Bier des aufzuheizenden Mediums und dem Foulingverhalten des Heizapparates ist eine möglichst niedrige Vorlauftemperatur des Speichermediums von Vorteil. Außerdem können mit niedrigen Temperaturen des Speichermediums die Wärmeverluste bei der Erzeugung und der Verteilung der Wärme minimiert werden. Aus diesen Gründen sollte im Wärmespeicher die oberste (wärmste) Schicht eine Temperatur von beispielsweise 130°C, insbesondere eine Temperatur bis maximal 120°C und bevorzugt eine Temperatur bis maximal 115°C aufweisen.

Manche Wärmeerzeuger benötigen für eine hohe Effizienz eine konstant niedrige Rücklauftemperatur aus den Wärmetauschern für die Wärmeverbraucher, in etwa 80°C. Als Wärmeerzeuger kann z. B. Dampf, Solarthermie, Fernwärme oder ein Blockheizkraftwerk verwendet werden. Der Vorteil der Erfindung ist, dass der Wärmespeicher alle Wärmeverbraucher der Anordnung mit den für sie optimierten Temperaturen versorgt. Hinzu kommt, dass ebenfalls der Wärmeerzeuger mit einem optimierten Temperaturniveau versorgt werden kann, so dass dieser effizient das Speichermedium auf ein erforderliches Temperaturniveau für die Einspeisung in den Speicher bzw. bereits für die Versorgung eines ersten Wärmeverbrauchers (Hochtemperaturverbraucher) bringt.

So ist z. B. eine Entnahmestelle in der unteren Schicht vorgesehen, die über eine Leitung mit dem Wärmeerzeuger verbunden ist. In einer weiteren Ausgestaltung sind der Rücklauf des mindestens einen ersten Wärmeverbrauchers (Hochtemperaturverbraucher) und/oder die Zwischenschicht mit einem Mischventil über eine Leitung mit einer weiteren Leitung verbunden. Dies hat wiederum den Vorteil, dass die Temperatur des in der Leitung befindlichen Speichermediums durch Zumischung einer höheren Temperatur des Speichermediums aus der Leitung auf ein höheres Temperaturniveau gebracht werden kann, so dass letztendlich dem Wärmeerzeuger das Speichermedium gezielt mit einer höheren Temperatur als wie üblich von ca. 80 °C zugeführt werden kann. Hinzu kommt, dass, wenn das Speichermedium aus der unteren Schicht mit weniger als 80°C in der Leitung vorherrscht, dieses durch Beimischung des Speichermediums aus der Zwischenschicht auf die erforderliche Temperatur von >= 80 °C gebracht werden kann.

Ferner ist eine zentrale Steuerung vorgesehen, die zum Einen mit den Mischventilen und zum Anderen mit Sensoren verbunden ist. Durch die Steuerung kann somit ein Volumenstrom des Speichermediums in der Anlage optimiert werden und mit den Sensoren kann sichergestellt werden, dass eine optimale Beladung des Wärmespeichers mit den mindestens drei Schichten gegeben ist. Der Wärmespeicher hat eine Entnahmestelle für Wärmeverbraucher in der oberen Schicht und eine Entnahmestelle in der Zwischenschicht ausgebildet. Über jeweils eine Leitung wird die Entnahmestelle zu einem Mischventil geführt, das dem jeweiligen Wärmeverbraucher vorgeschaltet ist. Durch das Zusammenwirken der Mischventile mit der Steuerung für die Anordnung kann somit eine optimale Temperatur für den jeweiligen Wärmetauscher des jeweiligen Wärmeverbrauchers eingestellt werden, damit der Wärmeübergang optimiert ist.

Analog dienen die Sensoren dazu, dass die räumliche Ausdehnung, sprich die Schichtdicke, der mindestens drei Schichten im Wärmespeicher ermittelt wird. Dadurch ist es möglich, den Zufluss über die Belademittel und die Entnahme an den Entnahmestellen derart zu steuern, dass jede der Schichten mit den jeweils zugeordneten Belademitteln bzw. den Entnahmestellen verbunden bleibt. Dies ist umso wichtiger, damit eine Entnahme und eine Beladung immer in den dafür vorgesehenen Schichten erfolgt und eine Durchmischung der diskreten Schichten im Wärmespeicher vermieden wird.

Gemäß einer Ausführungsform der Erfindung ist der Wärmespeicher auch als Druckspeicher ausgestaltet. Die Erfindung hat den Vorteil, dass im Wärmespeicher mindestens drei Temperaturniveaus vorgesehen sind. Entscheidend ist hierbei, dass die obere Schicht (Hochtemperaturschicht), welche über 100°C aufweist, beispielsweise 105°C bis 130°C, bevorzugt aber 105°C bis 120°C, vorhanden ist. Aus dieser oberen Schicht werden ein oder mehrere erste Verbraucher (Hochtemperaturverbraucher) versorgt. Der Rücklauf von diesen ersten Verbrauchern wird unter der oberen Schicht, also in der Zwischenschicht, wieder eingelagert und so lange zwischengespeichert, bis er für einen zweiten Wärmeverbraucher verwendet wird. Das Speichermedium hat dann im Rücklauf des zweiten Wärmeverbrauchers eine Temperatur von etwa 80°C. Die von den ersten Verbrauchern eingelagerte Rücklaufmenge sollte also bevorzugt so groß sein, dass sie für eine Erhitzung im zweiten Wärmeverbraucher ausreichend ist. Ein Vorteil der Steuerung und der Ausgestaltung des Wärmespeichers ist, dass die notwendigen Temperaturniveaus geschaffen und erhalten werden, so dass ausreichend Speichermedium in der jeweiligen Temperaturschicht vorhanden ist, um so eine optimale Versorgung der entsprechenden Wärmeverbraucher und auch des Wärmerzeugers zu gewährleisten und keine Schicht unkontrolliert anwächst.

Das erfindungsgemäße Verfahren zur Wärmespeicherung bei einem Getränkeherstellungsprozess zeichnet sich dadurch aus, dass zunächst das Beladen des Wärmespeichers aus einem laufenden Getränkeherstellungsprozess erfolgt. Bei dem Beladen aus dem laufenden Getränkeherstellungsprozess werden im Wärmespeicher mindestens drei diskrete Schichten ausgebildet, die sich hinsichtlich der Temperaturbereiche unterscheiden. Obwohl sich die nachstehende Beschreibung auf drei diskrete Schichten beschränkt, soll dies nicht als Beschränkung der Erfindung aufgefasst werden. Es ist für einen Fachmann selbstverständlich, dass mehr als drei diskrete Schichten im Wärmespeicher vorgesehen sein können. Die obere Schicht (Hochtemperaturschicht) wird mit einem Speichermedium in einem ersten Temperaturniveau vom Wärmeerzeuger gespeist. Eine Zwischenschicht wird mit einem zweiten Temperaturniveau des Speichermediums aus dem mindestens einen Rücklauf des mindestens einen ersten Wärmeverbrauchers (Hochtemperaturwärmeverbraucher) beladen. Gemäß einer Ausführungsform der Erfindung kann der Rücklauf der rekuperativen Wärmetauscher ebenfalls in die Zwischenschicht eingelagert werden. Eine untere Schicht wird mit einem Speichermedium eines dritten Temperaturniveaus aus mindestens einem Rücklauf eines mindestens zweiten Wärmeverbrauchers gezielt beladen.

Das Speichermedium kann, falls mehr als drei Schichten vorgesehen sind, auch aus der unteren Schicht und/oder aus einer auf die untere Schicht folgenden Zwischenschicht entnommen und dem Wärmerzeuger zugeführt werden.

Der Wärmeerzeuger bringt das Speichermedium aus der unteren Schicht und/oder einer Zwischensicht (bei mehr als drei Schichten) auf das erste Temperaturniveau und führt das Speichermedium wiederum der oberen Schicht zu. Es wird ebenfalls ein Speichermedium aus der oberen Schicht und der Zwischenschicht entnommen. Über entsprechende Leitungen werden das Speichermedium aus der oberen Schicht und das Speichermedium aus der Zwischenschicht zu einem Mischventil geführt, das jeweils mindestens einem zweiten Wärmeverbraucher vorgeschaltet ist. Das Speichermedium, welches sich dann in dem mindestens einen Rücklauf des mindestens zweiten Wärmeverbrauchers befindet, wird der unteren Schicht des Wärmespeichers zugeführt. Ebenso wird das Speichermedium aus dem mindestens einen Rücklauf des mindestens ersten Wärmeverbrauchers (Hochtemperaturverbrauchers) zu der Zwischenschicht des Wärmespeichers geführt.

Gemäß einer möglichen Ausgestaltung kann über ein der oberen Schicht zugeordnetes Belademittel mit einem Mischventil ein Speichermedium aus dem Wärmeerzeuger der oberen Schicht zugeführt werden. Ebenso kann mit dem Belademittel aus der oberen Schicht und/oder aus dem Wärmeerzeuger mittels des Mischventils das Speichermedium dem ersten Wärmeverbraucher (Hochtemperaturverbraucher) zugeführt werden. Ebenso ist ein rekuperativer Wärmetauscher vorgesehen und das Speichermedium im Rücklauf des ersten Wärmeverbrauchers und des rekuperativen Wärmetauscher weiteren ersten Wärmeverbrauchers wird über das Belademittel der Zwischenschicht zugeführt.

Das Speichermedium im Rücklauf des mindestens einen zweiten Wärmeverbrauchers wird mit dem Belademittel der unteren Schicht zugeführt.

Bei dem erfindungsgemäßen Verfahren wird in der oberen Schicht die Temperatur über der Siedetemperatur des Speichermediums eingestellt. In der Zwischenschicht wird die Temperatur zwischen 90°C und mindestens der Siedetemperatur des Speichermediums eingestellt und in der unteren Schicht wird die Temperatur des Speichermediums auf unter 90°C eingestellt.

Wie bereits in der Beschreibung zur Anordnung erwähnt, dient die zentrale Steuerung zum optimalen Management und der Zuführung des Speichermediums zu den ersten bzw. zweiten Verbrauchern. Hinzu kommt, dass mit der Steuerung ebenfalls die optimierte Einlagerung in den Wärmespeicher bewerkstelligt wird. So wird z. B. Das dem ersten Wärmeverbraucher zugeordnete Mischventil derart gesteuert, dass dem ersten Wärmeverbraucher das Speichermedium aus dem Wärmeerzeuger und/oder aus der oberen Schicht zugeführt wird. Somit kann die Temperatur des zugeführten Speichermediums nach Bedarf des ersten Wärmeverbrauchers (Hochtemperaturverbraucher) eingestellt werden.

Gleiches gilt natürlich auch für die Mischventile, die den zweiten Wärmeverbrauchern zugeordnet sind. Die Mischung über die Mischventile wird ebenfalls mit der Steuerung gesteuert, so dass einem jeden zweiten Wärmeverbraucher das Speichermedium aus der oberen Schicht und/oder aus der Zwischenschicht zugeführt wird. Dies hat ebenfalls den Vorteil, dass die Temperatur des zugeführten Speichermediums nach Bedarf des jeweiligen zweiten Wärmeverbrauchers eingestellt werden kann.

Ein weiterer Aspekt der Erfindung der Einsatz der erfindungsgemäßen Anordnung bei einer Brauereianlage mit mindestens einem Wärmespeicher. Mit dem Wärmespeicher sind mindestens ein Wärmeerzeuger sowie mindestens ein rekuperativer Wärmetauscher (zum Beispiel Pfannendunstkondesator) direkt verbunden. Je Nach Ausbau der Brauereianlage kann ferner zumindest einer der Einrichtungen oder Elemente, wie zum Beispiel eine Würzekoch- und/oder Würzeheißhalteeinrichtung, ein Läuterwürzeerhitzer, eine Maischbottichpfanne, ein Maischbottich, eine Flaschenreinigungsmaschine, eine CIP-Anlage und weitere zweite Wärmeverbraucher vorgesehen sein, die über Rückläufe von den jeweiligen Wärmetauschern mit dem Wärmespeicher kommunikativ verbunden. Der Würzepfanne ist ein Mischventil vorgeschaltet, so dass dem Außenkocher der Würzepfanne bei Bedarf ein Speichermedium aus dem Wärmeerzeuger und/oder aus einer oberen Schicht des Wärmespeichers zuführbar ist. Der Rücklauf der Würzepfanne und des Pfannendunstkondensators sind einer Zwischenschicht des Wärmespeichers über ein Belademittel zuführbar. Dem Läuterwürzeerhitzer, der Maischbottichpfanne, dem Maischbottich, der Flaschenreinigungsmaschine, der CIP-Anlage und weiteren zweiten Wärmeverbrauchern ist jeweils ein Mischventil vorgeschaltet. Somit kann dem Wärmetauscher bei Bedarf das Speichermedium über Entnahmestellen aus der oberen Schicht und/oder der Zwischenschicht des Wärmespeichers zugeführt werden. Die Rückläufe der jeweiligen Wärmetauscher sind der unteren Schicht des Wärmespeichers über ein Belademittel zuführbar.

Der Wärmespeicher ist dabei derart ausgelegt, dass zwischen der oberen Schicht und der unteren Schicht im Wärmespeicher ein Temperaturbereich von 70°C bis 150°C vorherrscht. Die obere Schicht hat bevorzugt ein Temperaturniveau von 105°C bis 130°C. Besonders bevorzugt aber ein Temperaturniveau von 105°C bis 120°C. Die Zwischenschicht hat dabei im Wesentlichen ein Temperaturniveau von 90°C bis zur Siedetemperatur des Speichermediums, jedoch auch bis zu 105°C, bevorzugt aber ein Temperaturniveau von 95°C bis 98°C. Die untere Schicht hat ein Temperaturniveau von unter 90°C, bevorzugt aber zwischen 75°C bis 85°C.

Für den Fall, dass die gegenwärtige Erfindung bei einer Brauereianlage Anwendung findet, ist der Würzekoch- und/oder Würzeheißhalteeinrichtung ein Außenkocher (Wärmetauscher) zugeordnet und die Würzekoch- und/oder Würzeheißhalteeinrichtung ist mit einem Pfannendunstkondensator zur Brüdenrekuperation verbunden. Der Rücklauf aus dem rekuperativen Wärmetauscher (Außenkocher) und der Rücklauf aus dem Pfannendunstkondensator sind mit der Zwischenschicht des Wärmespeichers verbunden.

Die Brauereianlage ist mit einer Steuerung versehen, die mit Sensoren verbunden ist und so die räumliche Ausdehnung der mindestens drei Schichten im Wärmespeicher ermittelt. Ebenso wird mittels der Steuerung ein Zufluss über die Belademittel und eine Entnahme an Entnahmestellen gesteuert, so dass jede der Schichten mit den jeweils zugeordneten Belademitteln bzw. den Entnahmestellen verbunden bleibt. Ebenso ist die Steuerung mit den Mischelementen (z.B. Mischventilen) verbunden, um die Temperatur der Elemente einer Brauereianlage, die z.B. mindestens eine Würzekoch- und/oder Würzeheißhalteeinrichtung, mindestens ein Pfannendunstkondensators, mindestens ein Läuterwürzeerhitzer, mindestens eine Maischbottichpfanne, mindestens ein Maischbottichs, mindestens eine Flaschenreinigungsmaschine, mindestens eine CIP-Anlage und weiteren zweiten Wärmeverbraucher sind, zugeführten Speichermediums einzustellen.

Die Steuerung kann mit den Sensoren bzw. Mischventilen verdrahtet sein oder auch drahtlos kommunizieren.

Bei der gegenwärtigen Erfindung wird die Energieschaukel, die aus dem Pfannendunstkondensator, der Würzekoch- und/oder Würzeheißhalteeinrichtung sowie dem Läuterwürzeerhitzer besteht, verändert. Es versteht sich das der Wärmespeicher ein notwendiger Bestandteil der Energieschaukel ist. Der Läuterwürzeerhitzer wird gemäß der Erfindung nicht mehr ausschließlich vom Pfannendunstkondensator versorgt. Die Versorgung erfolgt somit teilweise oder komplett von den Rückläufen der ersten Wärmeverbraucher (Hochtemperaturverbraucher). Die Vorlauftemperatur zum Läuterwürzeerhitzer soll jedoch bevorzugt so hoch ausmischbar sein, dass die Läuterwürze in einem Aufheizschritt auf nahe Kochtemperatur oder darüber hinaus erhitzt werden kann. Wie aus dem Stand der Technik bekannt, wird bei der Energieschaukel aus Läuterwürzeerhitzer und Pfannendunstkondensator eine Gesamtverdampfung von rund 4% benötigt. Durch die erfindungsgemäße Entkoppelung dieser Schaukel wird eine Reduzierung der Gesamtverdampfung bei einem weiterhin ausgeglichenen Energiekonzept ermöglicht. Es ergeben sich daraus drei Vorteile: Erstens kann die Läuterwürze auf ein höheres Temperaturniveau gebracht werden. Zweitens kann die Belegungszeit in der Würzepfanne verkürzt werden. Drittens erreicht man durch die Entkopplung dieser Energieschaukel eine höhere Variabilität in der Verfahrensweise der Würzekochung.

Bei einer Gesamtverdampfung von 4% bei der Würzekochung reicht die Brüdenenergie aus, um die bekannte Energieschaukel zu bedienen. Die Würze wird dabei von beispielsweise 75 °C auf 92 °C erwärmt. Reduziert man jedoch die Gesamtverdampfung, kann man die gesamte Läuterwürzemenge nicht mehr auf die gewünschte Temperatur anheben. Mit der erfindungsgemäßen Ausgestaltung der Energieschaukel des Läuterwürzeerhitzers wird nun die Läuterwürze komplett oder teilweise über das Speichermedium der Rücklauf der ersten Wärmeverbraucher (Hochtemperaturverbraucher) versorgt.

Durch die Aufspaltung der bereits bekannten Energieschaukel aus Pfannendunstkondensator, Würzepfanne und Läuterwürzeerhitzer kann im Sudhaus ein Wärmeenergieüberschuss entstehen. Dieser Überschuss wird jedoch gewollt, da somit weitere Verbraucher in der Brauerei, insbesondere die Flaschenreinigungsmaschine versorgt werden können. Somit kann ein ausgeglichener Wärmehaushalt für das Sudhaus auf die gesamte Brauerei erweitert werden.

Der Wärmespeicher ist dabei als Druckspeicher ausgeführt. Durch die Nutzung von rekuperativer Energie bei gleichzeitiger Substitution der Primärenergienutzung kann somit der Wärmeerzeuger, beispielsweise ein Dampf- oder Hochdruckheizwasserkessel, kleiner ausgelegt werden.

Als weiterer Vorteil der Erfindung können die Versorgungsleitungen oder Regelorgane etc., kleiner ausgeführt werden. Zudem werden durch den Wärmespeicher Lastspitzen am Wärmeerzeuger minimiert, wodurch dieser nahezu kontinuierlich betrieben werden kann. Dadurch reduzieren sich ebenfalls Wartungsarbeiten am Wärmeerzeuger, was gleichzeitig zu einer Verlängerung der Lebensdauer des Wärmeerzeugers führt.

Die Erfindung hat nun auch den Vorteil, dass die im Wärmespeicher vorhandenen mindestens drei Schichten über die Steuerung derart eingestellt werden, dass keine dieser Schichten eine Ausdehnung über einen vordefinierten Schwellwert annimmt. Dies bedeutet, man muss jede Energiemenge auf einem bestimmten Temperaturniveau weiter verwenden und damit das Temperaturniveau weiter absenken, oder man hebt diese mittels Primärenergie direkt wieder auf ein höheres Temperaturniveau an.

Ein weiterer erfindungsgemäßer Gedanke ist, dass am Wärmespeicher eine Kaskadenschaltung zur Aufwärts- und/oder Abwärtsmischung unterschiedlicher Temperaturen vorgesehen wird. Die Ausmischung kann dabei durch Mischventile erfolgen, welche als Wassermischer, Dreiwegeventile oder Regelkappen oder dafür geeignete Vorrichtungen ausgestaltet sind. Hierdurch können unterschiedliche Schichten im Wärmespeicher so zusammengemischt werden, dass etwaige andere Wärmeverbraucher bei entsprechender Auslegung eine möglichst niedrige Rücklauftemperatur bereitstellen.

Durch diese Verfahrensweise wird eine optimierte Nutzung der bereitgestellten Energie in der gesamten Brauerei gewährleistet und gleichzeitig Wärmeverluste und die Speichergröße minimiert.

Ferner wird durch diese Verfahrensweise somit die obere Schicht (die Schicht mit der höchsten Temperatur) geschont und es steht zu jeder Zeit ein ausreichend hohes Temperaturniveau für alle Wärmeverbraucher und auch Wärmeproduzenten zur Verfügung. Ein weiterer Vorteil der Kaskadenschaltung ist, Wärmeverbraucher/Wärmeerzeuger bevorzugt mit den spezifischen Temperaturschichten aus den unterschiedlichen Rückläufen zum Wärmespeicher zu versorgen, d. h. auch verschiedene nachfolgende Wärmeverbraucher sollten mit dem Ziel bedient werden, dass das Speichermedium maximal abkühlt und sich damit auch das Wärmespeichervolumen und die Verluste maximal reduziert werden. Beispielsweise sollen Rückläufe von der Würzepfanne (< 102°C) in einem nächsten Schritt beispielsweise zur Läuterwürzeerhitzung eingesetzt werden. Die Rücklauftemperatur beträgt so beispielsweise <= 80°C.

In einer Erweiterung befinden sich weitere Ausmischvorrichtungen in den Leitungen zur Abholung rekuperativer Energie um zum Beispiel "mittelwarmes" Speichermdium aus nicht optimal ausgelegten Wärmeverbrauchern mit zum Beispiel 85°C, direkt wieder auf zum Beispiel 98°C anzuheben und damit auch volumenmäßig mehr 98°C heißes Speichermedium über den Rekuperator (beispielsweise Pfannendunskondensator) zu gewinnen bzw. einzustellen.

In einer weiteren Erweiterung ist es möglich, durch Anbindung des Rücklaufs an mehrere Einlagerungsmöglichkeiten in den Wärmespeicher den Rücklauf temperaturgesteuert und damit optimiert in die dem Rücklauf am besten entsprechende Temperaturschicht im Schichtenspeicher einzulagern.

In einer weiteren Ausprägung der Erfindung wird die unterste Schicht derart gehalten bzw. konstruktiv vordefiniert, dass lediglich die Anlagenteile auf die unterste Temperaturschicht zugreifen können, die dieses Temperaturniveau benötigen und/oder liefern. Hierzu werden lediglich diese Wärmeverbraucher mit dem Belademittel der unteren Schicht des Wärmespeichers verbunden. Alle anderen Wärmeverbraucher und/oder Wärmeerzeuger und/oder rekuperative Wärmetauscher werden auf eine oder mehrere andere Belademittel oberhalb der erhaltenden unteren Schicht geführt.

In einer weiteren Ausgestaltung der Erfindung bedarf es zur Aufrechterhaltung der obersten (heißesten) Schicht des Wärmespeichers einer optimierten Steuerung. Um ein nahezu kontinuierliches Nachspeisen des Wärmespeichers bei gleichzeitig weitgehend niedrigem und konstantem Lastgang des Wärmeerzeugers zu erreichen, sind zumindest zwei Sensoren (Temperaturfühler) in einem gewissen, für jeden Anwendungsfall spezifisch zu bestimmenden Abstand zueinander vorzusehen. Innerhalb des Abstandes der Temperaturfühler ist der untere Bereich der obersten Temperaturschicht auf demselben Niveau zu halten. Erreicht wird dies, in dem sowohl dem oberen, als auch dem unteren Sensor (Temperaturfühler) eine vorzugebende Start- und Stopp-Temperatur vorgegeben wird. Der Energieversorger wird somit bei Unterschreitung der vorgegebenen Mindesttemperatur des oberen Sensors gestartet und spätestens bei Erreichen der oberen maximal erlaubten Temperatur des unteren Sensors gestoppt oder im Wärmestrom reduziert. Mit der Verwendung jeweils einer Start- und Stopp-Temperatur für jeden der Sensoren, welche als Temperaturfühler verwendet werden, wird ein vergrößerter Regelbereich zur Nachspeisung des Wärmespeichers geschaffen. Dadurch ist zum Einen die Steuerung und Nachspeisung leichter regelbar und zum Anderen ist eine bessere Vergleichmäßigung des Lastgangs am Wärmeerzeuger erreicht. Ähnliches kann mit geringerer Effektivität auch mit nur einer Starttemperatur für die oberen und einer Stopp-Temperatur für den unteren Sensor erzielt werden. Ebenso ist der Einsatz von mehr oder auch weniger als nur zwei Sensoren zur Steuerung der Nachspeisung denkbar. Somit ergibt sich ein für jeden Anwendungsfall spezifisch einzustellender Temperaturbereich, innerhalb dessen eine optimale Energiezufuhr aus dem Wärmeerzeuger erfolgt.

In einer bevorzugten Ausführungsform wird bei der Nachspeisung des Wärmespeichers vorzugsweise das Speichermedium aus der auf die oberste und damit heißeste Temperaturschicht folgende Zwischenschicht entnommen und auf die Temperatur der obersten Schicht und/oder darüber erwärmt. Dies ermöglicht eine schnellere Bereitstellung einer entsprechend höheren Menge von heißem Speichermedium, gegenüber der Verwendung von kaltem Speichermedium. Zudem werden dadurch Energiespitzen am Wärmeerzeuger sowie Verluste am Wärmespeicher und bei der Übertragung reduziert. Diese Verfahrensweise ermöglicht ein kurzfristiges bzw. schnelles Reagieren auf entsprechende Energieanforderungen der Anordnung bzw. der Brauereianlage. Bei Verzicht auf diese Möglichkeit kann der Wärmespeicher komplett aufgeladen werden, was bei Einbindung bestimmter Wärmeerzeuger wie beispielhaft Solarthermie von Vorteil ist.

Ferner ist es auch möglich, dass das Speichermedium, welches das erforderliche Temperaturniveau für den Wärmeerzeuger bereits aufweist, direkt am Wärmespeicher vorbei zum Wärmeerzeuger geleitet wird. Zudem ist es auch möglich, eine Mischung aus den genannten Optionen einzusetzen.

Es ist anzumerken, dass wenn bei der gegenwärtigen Erfindung von einer Anlage zur Getränkeherstellung gesprochen wird, auch die Abfüllung und Verpackung von Getränken verstanden wird.

Wenn in der gegenwärtigen Erfindung von einer Brauereianlage oder der Bierherstellung gesprochen wird, so umfasst dies auch die Abfüllung und Verpackung von Bier beziehungsweise die Produkte welche in der Brauerei hergestellt werden.

Wenn in der gegenwärtigen Erfindung die Rede von einem Wärmetauscher ist, so kann es sich um einen Außenkocher, Innenkocher, einer Boden- und/oder Zargenheizfläche, einem Plattenwärmetauscher oder Rohrbündelwärmetauscher handeln.

Unter dem Speichermedium ist ein Wärmeträger zu verstehen, insbesondere handelt es sich um Wasser.

Wenn in dieser Erfindung von einer Maischbottichpfanne oder einem Maischbottich die Rede ist dann ist damit ein über Heizeinrichtungen beheizbares Gefäß, welche im und/oder am Gefäß angebracht sind, zu verstehen, in welchem der Maischprozess abläuft. In einer Maischbottichpfanne werden bevorzugt Teilmaischen oder Rohfruchtmaischen behandelt beziehungsweise auf nahe Kochtemperatur oder auf Kochtemperatur erhitzt und gegebenenfalls gekocht. Der Maischbottich fasst die gesamte Maische und kann diese auf übliche Abmaischtemperaturen erwärmen. Weiterhin sind hier auch Kombinationen wie einer kombinierten Maisch-/Würzepfanne oder einem Maisch-/Läuterbottich enthalten. Der Begriff des Maischgefäßes steht allgemein für eine Gruppe von Gefäßen, in denen der Maischprozess durchgeführt wird und kann somit alle oben aufgezählten Gefäßarten beinhalten.

Im Folgenden sollen Ausführungsbeispiele die Erfindung und ihre Vorteile anhand der beigefügten Figuren näher erläutern. Die Größenverhältnisse der Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Figur 1: eine schematische Darstellung einer Anordnung zur Wärmespeicherung in einer Anlage zur Getränkeherstellung;
- Figur 2: eine schematische Darstellung einer Ausführungsform der Anordnung zur Wärmespeicherung in einer Anlage zur Getränkeherstellung;
- Figur 3: eine schematische Darstellung der Steuerung der Anordnung zur Wärmespeicherung in einer Anlage zur Getränkeherstellung;
- Figur 4: eine Ausführungsform der Erfindung im Einsatz bei einer Brauereianlage;
- Figur 5: eine schematische Darstellung der Energieschaukel, bestehend aus Pfannendunstkondensator, Würzepfanne sowie Läuterwürzeerhitzer;
- Figur 6: eine schematische Darstellung des erfindungsgemäßen Wärmespeichers mit einer Kaskadenschaltung der Entnahmestellen; und
- Figur 7: eine schematische Darstellung des erfindungsgemäßen Wärmespeichers, bei dem das Speichermedium in fünf Zonen eingelagert ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Im Folgenden werden Ausführungsformen einer erfindungsgemäßen Anlage unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen. Weiter sei angemerkt, dass in den Figuren und auch in der Beschreibung die zahlreichen für die vorstehend geschilderte Erfindung erforderlichen Stellglieder, Ventile, Pumpen und sonstige Fördereinrichtungen oder Einrichtungen für Mess-, Regelungs- und Steuerungstechnik der Übersichtlichkeit wegen nicht beschrieben und dargestellt sind.

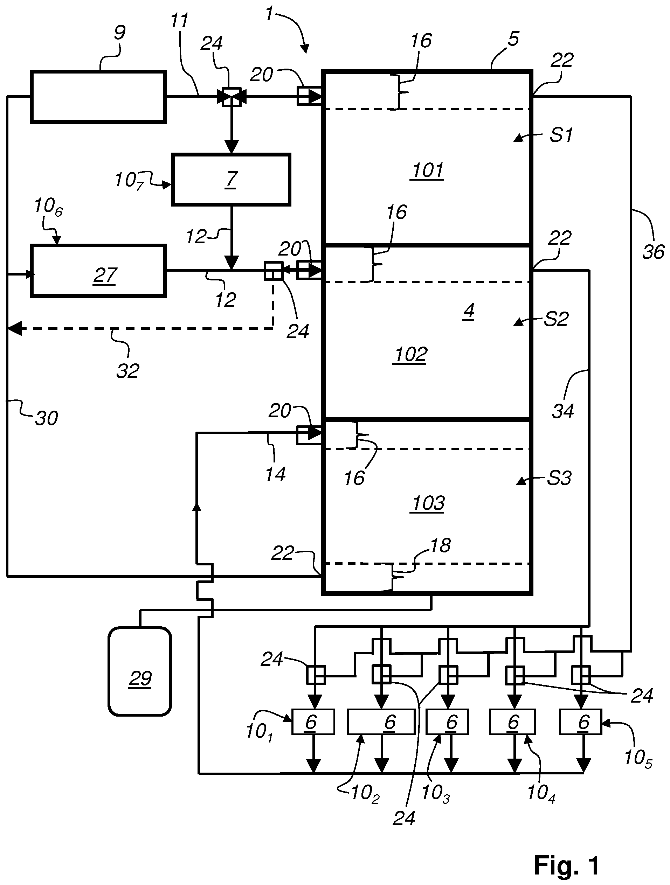

**Figur 1** zeigt eine Ausführungsform der erfindungsgemäßen Anordnung 1 zur Wärmespeicherung in einer Anlage zur Getränkeherstellung. Die Anordnung 1 besitzt einen Wärmespeicher 5. Ferner sind mehrere Wärmeverbraucher 10₁, 10₂, 10₃, ..., 10_{N} vorgesehen, die mit dem Wärmespeicher 5 zur Einspeisung und/oder Entnahme von Wärmeenergie verbunden sind. Bevorzugt ist das Speichermedium 4 Wasser. Das Speichermedium 4 ist im Wärmespeicher 5 in mehreren Schichten S1, S2, S3, ..., SN in jeweils unterschiedlichen Temperaturbereichen gespeichert. Obwohl bei der in Figur 1 gezeigten Ausführungsform lediglich drei Schichten S1, S2 und S3 dargestellt sind, soll dies nicht als eine Beschränkung der Erfindung aufgefasst werden. Ebenso sind zwischen den Schichten S1 und S2, sowie zwischen S2 und S3 Trennlinien eingezeichnet, die nur die Abgrenzung der einzelnen Schichten S1, S2 und S3 darstellen sollen. Diese Trennlinien sind nicht als feste mechanische Grenze zwischen den Schichten S1, S2 und S3 zu verstehen. Die Trennlinien deuten an, dass im Wärmespeicher 5 mindestens drei diskrete Schichten S1, S2, S3, ..., SN, vorhanden sind. Der Wärmespeicher 5 ist dabei derart ausgebildet, dass nach Bedarf jede der mindestens drei diskreten Schichten S1, S2, S3, ..., SN mit einem Belademittel im jeweiligen Temperaturbereich kommunikativ zum temperaturabhängigen Einschichten verbunden ist. Mit dem Belademittel 20 wird somit der Wärmespeicher 5 in den entsprechend der jeweiligen Schicht S1, S2, S3 zugeordneten Temperaturbereichen mit einem Speichermedium 4 beladen.

In dem Wärmespeicher 5, wie in Figur 1 dargestellt, ist eine obere Schicht 101 über das Belademittel 20 mit dem Wärmeerzeuger 9 verbunden. Die obere Schicht 101 (heißeste Schicht) besitzt einen Temperaturbereich über einer Siedetemperatur des Speichermediums 4. Der Temperaturbereich in der oberen Schicht 101 liegt beispielsweise zwischen 105°C bis 130°C und bevorzugt aber zwischen 105°C bis 120°C. In der auf die obere Schicht 101 folgenden Zwischenschicht 102 liegt ein Temperaturbereich zwischen 90°C und 105°C, bevorzugt jedoch zwischen 90°C und der Siedetemperatur des Speichermediums. Bevorzugt liegt der Temperaturbereich der Zwischenschicht 102 zwischen 95°C bis 98°C. Auf die Zwischenschicht 102 folgt die untere Schicht 103. Der Temperaturbereich in der unteren Schicht 103 liegt unter 90°C und bevorzugt in einem Temperaturbereich von 75°C bis 85°C.

Über das der oberen Schicht 101 zugeordnete Belademittel 20 kann das Speichermedium 4 in den Wärmespeicher 5 aus einem Wärmeerzeuger 9 in den Wärmespeicher 5 eingeschichtet werden. Über ein Belademittel 20, das der Zwischenschicht 102 zugeordnet ist, kann das Speichermedium 4 aus dem mindestens einen Rücklauf 12 eines rekuperativen Wärmetauschers 27 und eines mindestens ersten Wärmeverbrauchers 7 eingeschichtet werden. Die ersten Wärmeverbraucher 7 sind in der Regel Hochtemperaturverbraucher, die eine Produkttemperatur von >= 95°C aufweisen. Über ein der unteren Schicht 103 zugeordnetes Belademittel 20, kann das Speichermedium 4 aus mindestens einem Rücklauf 14 eines Wärmetauschers (hier nicht dargestellt) eines mindestens zweiten Wärmeverbrauchers 6 eingeschichtet werden. Bei der in Figur 1 gezeigten Ausführungsform sind die Belademittel 20 als Einschichtstellen ausgebildet. Die Einschichtstellen 20 münden in der jeweiligen Schicht S1, S2, S3, ..., SN des Wärmespeichers 5, um dort ein temperaturbestimmtes Einschichten des Speichermediums 4 zu erreichen.

Der oberen Schicht 101, der Zwischenschicht 102 und der unteren Schicht 103 ist jeweils eine Entnahmestelle 22 zugeordnet. Bei der in Figur 1 gezeigten Ausführungsform ist in der oberen Schicht 101 das Belademittel 20 und die Entnahmestelle 22 in einem oberen Bereich 16 der oberen Schicht 101 vorgesehen. In der Zwischenschicht 102 ist ebenfalls das Belademittel 20 und die Entnahmestelle 22 im oberen Bereich 16 der Zwischenschicht 102 vorgesehen. In der unteren Schicht 103 ist das Belademittel 20 im oberen Bereich 16 und die Entnahmestelle 22 im unteren Bereich 18 der unteren Schicht 103 vorgesehen. Es ist für einen Fachmann selbstverständlich, dass die Anordnungen der Belademittel 20 bzw. der Entnahmestellen 22 auch anders als hier dargestellt am Wärmespeicher 5 angeordnet sein können.

Der Wärmespeicher 5 ist als Druckspeicher ausgebildet und die untere Schicht 103 des Wärmespeichers 5 ist vorzugsweise mit einem optionalen Druckausgleichsbehälter 29 kommunikativ verbunden. Der optionale Druckausgleichsbehälter 29 kann alternativ auch in einer Leitung beinhaltet sein, welche mit dem Wärmespeicher 5 kommunikativ verbunden ist. In einer Zuleitung 11 vom Wärmeerzeuger 9 zum Belademittel 20 für die obere Schicht 101 ist ein Mischventil bzw. eine Mischeinrichtung 24 (alternativ kann es sich auch lediglich um eine einfache Anbindung handeln) vorgesehen. Über das Mischventil 24 kann somit der erste Wärmeverbraucher 7 aus dem Wärmeerzeuger 9 und/oder über das Belademittel 20 auch aus der oberen Schicht 101 mit dem Speichermedium 4 versorgt werden. Durch das Mischventil 24 ist es möglich, somit die Temperatur und/oder des Volumenstroms des Speichermediums 4 optimal einzustellen, um einen effektiven Wärmeübergang im Wärmetauscher (hier nicht dargestellt) des ersten Wärmeverbrauchers 7 zu erreichen. Weiterhin ist durch das Mischventil 24 gewährleistet, dass der erste Wärmeverbraucher 7 stets mit der notwendigen Energie aus dem Wärmespeicher 5 und/oder dem Wärmeerzeuger 9 versorgt wird. Weiterhin ist durch das Mischventil 24 gewährleistet, dass der Wärmeerzeuger 9 die Energie kontinuierlich abgeben kann, entweder an den Wärmespeicher 5 und/oder an den ersten Wärmeverbraucher 7. Die Rückläufe 12 aus den ersten Wärmeverbrauchern 7 und dem rekuperativen Wärmetauscher 27 werden über das Belademittel 20 der Zwischenschicht 102 dem Wärmespeicher 5 zugeführt. In dem Rücklauf 12, der von einem der ersten Wärmeverbraucher 7 direkt zum Belademittel 20 führt, ist ebenfalls ein Mischventil 24 vorgesehen. Von dem Mischventil 24 (alternativ kann es sich auch lediglich um eine einfache Anbindung handeln) führt eine Leitung 32 zu einer Leitung 30, die von der Entnahmestelle 22 der unteren Schicht 103 zum Wärmeerzeuger 9 führt. Mit dem Mischventil 24 (alternativ kann es sich auch lediglich um eine einfache Anbindung handeln) ist es somit möglich, das Speichermedium 4 aus den Rückläufen 12 und/oder auch aus der Zwischenschicht 102 der Leitung 32 und somit dem Wärmeerzeuger 9 zuzuführen. Somit kann die obere Schicht 101 im Bedarfsfall zügig erneuert werden, wenn die obere Schicht 101 zuvor stark dezimiert wurde. Durch die Entnahme des Speichermediums 4 aus der Leitung 32, also aus der Zwischenschicht 102, bedarf es im Wärmeerzeuger 9 nur einer geringen Temperaturerhöhung wodurch sich das Speichermedium 4 zügiger auf das notwendige Temperaturniveau der oberen Schicht 101 erhöhen lässt.

Jedem der zweiten Wärmeverbraucher 6 ist jeweils ein Mischventil 24 zugeordnet. Von einer der obersten Schicht 101 zugeordneten Entnahmestelle 22 führt eine Leitung 36 zu jedem der Mischventile 24. Ebenso führt von der Entnahmestelle 22 der Zwischenschicht 102 eine Leitung 34 zu jedem der Mischventile 24. Durch die Anordnung der Leitungen 34 und 36 sowie der Mischventile 24 ist es möglich, jedem der zweiten Wärmeverbraucher 6 das Speichermedium 4 mit einem für den jeweiligen Prozessschritt optimalen Temperaturniveau zuzuführen. Die von den zweiten Wärmeverbrauchern 6 ausgehenden Rückläufe 14 werden über das Belademittel 20 der unteren Schicht 103 zugeführt.

In einer der Regel werden die zweiten Wärmeverbraucher 6 aus der Zwischenschicht 102 versorgt, nur wenn entweder die Temperatur und/oder die Wärmemenge aus der Zwischenschicht nicht ausreichend ist, wird Energie aus der oberen Schicht 101 beigemischt. Die gesteuerten Mischventile 24 sorgen für eine Einstellung der erforderlichen Temperatur und/oder die Wärmemenge im laufenden Prozess. Es ist für einen Fachmann selbstverständlich, dass die Zwischenschicht 102 nur gemeint ist, wenn es drei Schichten S1, S2 und S3 im Wärmespeicher 5 handelt. Bei mehr als drei Schichten im Wärmespeicher 5 ist mit der Zwischenschicht 102 die zweithöchste Schicht S2 gemeint. Die rekuperativen Wärmetauscher 27 der Anordnung 1 sind über deren Rückläufe 12 mit der Zwischenschicht 102 verbunden und lagern dort in den Wärmespeicher ein. Durch die Ausbildung der mindestens drei Schichten S1, S2 und S3, erreicht man für den Betrieb der Anordnung 1 eine optimale Spreizung der Temperaturniveaus im Wärmespeicher 5. Entscheidend hierbei ist, dass die obere Schicht 101 "eine Hochtemperaturschicht" ist. Bevorzugt ist das Temperaturniveau in der oberen Schicht 101 zwischen 105°C bis 120°C. Der Rücklauf 12 von dem mindestens einen ersten Verbraucher 7, die Produkttemperaturen von >= 95°C aufweisen, wird direkt in die Zwischenschicht 102 eingelagert, die unter der oberen Schicht 101 angeordnet ist. In der Zwischenschicht 102 liegt das Temperaturniveau besonders bevorzugt zwischen 95°C bis 98°C. Das Speichermedium 4 in den Rückläufen 14 aus den zweiten Wärmeverbrauchern 6 ist dabei derart weit abgekühlt, dass das Speichermedium 4 hier in die untere Schicht 103 eingelagert werden kann. Das Temperaturniveau der unteren Schicht 103 liegt bevorzugt zwischen 75°C bis 85°C.

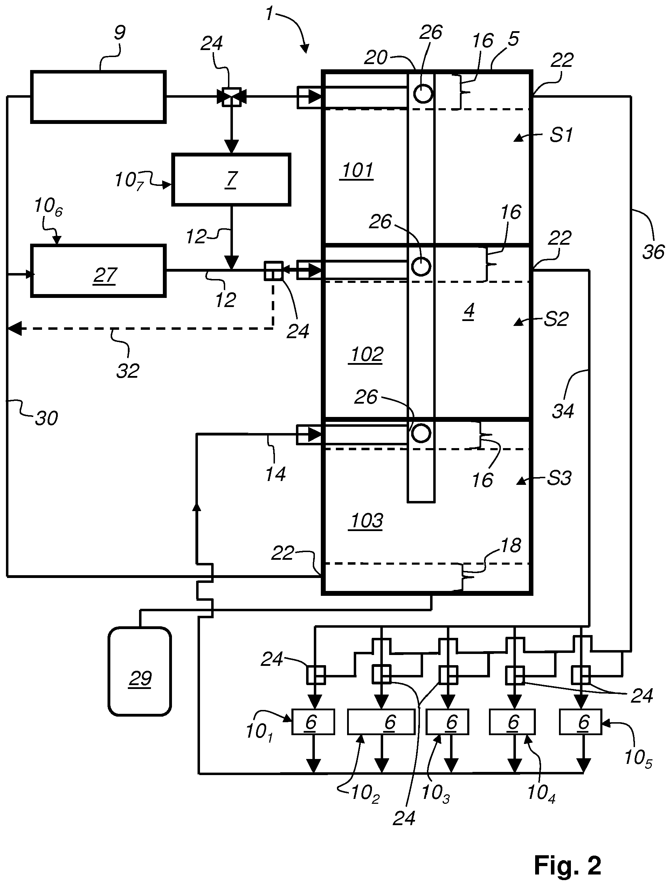

In **Figur 2** ist eine weitere Ausführungsform der Anordnung 1 dargestellt. Alle Elemente der Figur 2 sind bereits in der Figur 1 beschrieben worden, deshalb wird hier auf eine erneute Beschreibung verzichtet. Figur 2 unterscheidet sich von dem Ausführungsbeispiel in Figur 1 dadurch, dass das Belademittel 20 als mindestens eine Schichtlanze 20 ausgebildet ist. Die mindestens eine Schichtlanze 20 ist dabei mit Öffnungen 26 versehen, die der oberen Schicht 101, der Zwischenschicht 102 bzw. der unteren Schicht 103 zugeordnet sind, um somit ein temperaturgenaues Einschichten des Speichermediums 4 in die jeweilige der drei Schichten 101, 102, 103 zu erzielen.

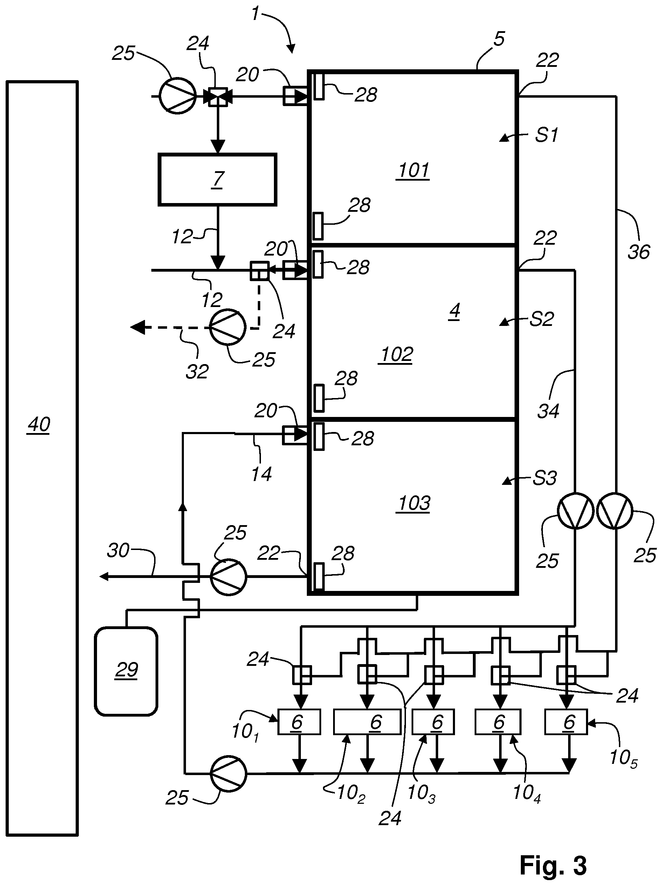

**Figur 3** zeigt eine Steuerung 40, mit der die Volumenströme des Speichermediums 4 innerhalb der Anordnung 1 derart optimal gesteuert werden, dass sich in der obersten Schicht 101 die heißeste Temperaturschicht im Wärmespeicher 5 ausbildet. Ebenso soll mit der Steuerung 40 eine schnelle Bereitstellung von heißem Speichermedium 4 für den Wärmeerzeuger 9 (nicht dargestellt, siehe Figur 1) ermöglicht werden, so dass dadurch Energiespitzen, sowie Verluste am Wärmespeicher 5 und bei der Übertragung reduziert werden können. Der Übersicht halber ist nur ein Teil der Anordnung 1 dargestellt. In der Leitung 36 aus der Entnahmestelle 22 der oberen Schicht 101, in der Leitung 34 der Entnahmestelle 22 der Zwischenschicht 102 und in der Leitung 30 der Entnahmestelle 22 der unteren Schicht 103 ist zur Verdeutlichung jeweils eine Pumpe 25 vorgesehen. Alternativ können die Pumpen 25 auch so angeordnet sein, dass sie das Speichermedium 4 zum jeweiligen zweiten Wärmeverbraucher 6 bzw. ersten Wärmeverbraucher 7 saugen. Ebenso ist in dem Rücklauf 14 der zweiten Wärmeverbraucher 6 eine Pumpe 25 vorgesehen. Auch in der Leitung 30, die über den Wärmeerzeuger 9 (nicht dargestellt, siehe Figur 1) zum Belademittel 20 der oberen Schicht 101 führt, kann eine Pumpe 25 vorgesehen sein. In der Leitung 32, welche zur Leitung 30 führt, die letztendlich im Wärmeerzeuger 9 (nicht dargestellt, siehe Figur 1) endet, kann eine Pumpe 25 eingebracht sein. Über die Steuerung 40, die mit den Pumpen 25 verdrahtet bzw. drahtlos kommuniziert, kann somit der Volumenstrom vom Speichermedium 4 nach den Bedürfnissen der Anlage 1 eingestellt werden. Ebenso sind sämtliche Mischventile 24 der Anordnung 1 mit der Steuerung 40 kommunikativ verbunden. Durch die Mischventile 24 in Zusammenwirkung mit den Pumpen 25 kann somit der Volumenstrom des Speichermediums 4 optimiert werden, um letztendlich auch den Energieverlust der Anordnung 1 so gering wie möglich zu halten.

Die Steuerung 40 ist ebenfalls mit mindestens einem Sensor 28 des Wärmespeichers 5 kommunikativ verbunden. Mit dem mindestens einen Sensor 28 kann somit die räumliche Ausdehnung, das heißt die Schichtdicke, eine jeden der drei S1, S2 und S3 im Wärmespeicher 5 ermittelt, bzw. überwacht werden. Bei mehr als drei Schichten S1, S2, S3, ..., SN wird mit einer entsprechenden Anzahl von Sensoren 28 deren räumliche Ausdehnung, sprich die Schichtdicke, überwacht. Mit der Steuerung 40 ist es somit möglich, die oberste (heißeste) Schicht 101 des Wärmespeichers 5 aufrecht zu erhalten. Ebenso ist es somit mit der Steuerung 40 möglich, die räumliche Ausdehnung der mindestens drei Schichten zu ermitteln und einen Zufluss über die Belademittel 20 und eine Entnahme an den Entnahmestellen 22 derart zu steuern, dass jede der Schichten S1, S2 und S3 mit den jeweils zugeordneten Belademitteln 20 bzw. den Entnahmestellen 22 verbunden bleibt. Mit der Steuerung 40, die mit den Sensoren 28, den Pumpen 25 und den Mischventilen 24 kommunikativ verbunden ist, kann somit die Steuerung der gesamten Anordnung 1 bzw. auch die Nachspeisung des Wärmespeichers 5 leicht regelbar sein, was auch zu einer besseren Vergleichmäßigung des Lastgangs am Wärmeerzeuger 9 führt. Die Steuerung 40 ist in einer besonderen Ausprägung so eingestellt, dass stets die zweiten Wärmeverbraucher 6 über die die Zwischenschicht 102 bzw. über die zweite höchste Schicht S2 versorgt werden. Nur wenn diese nicht ausreicht wird über die obere Schicht 101 bzw. erste Schicht S1 den zweiten Wärmeverbraucher 6 Speichermedium zugeführt. Weiterhin kann zur schnellen Erhöhung der Temperatur in der obere Schicht 101 bzw. ersten Schicht S1, dem Wärmeerzeuger 9 aus der Zwischenschicht 102 bzw. der zweiten Schicht S2 das Speichermedium 4 zugeführt werden.

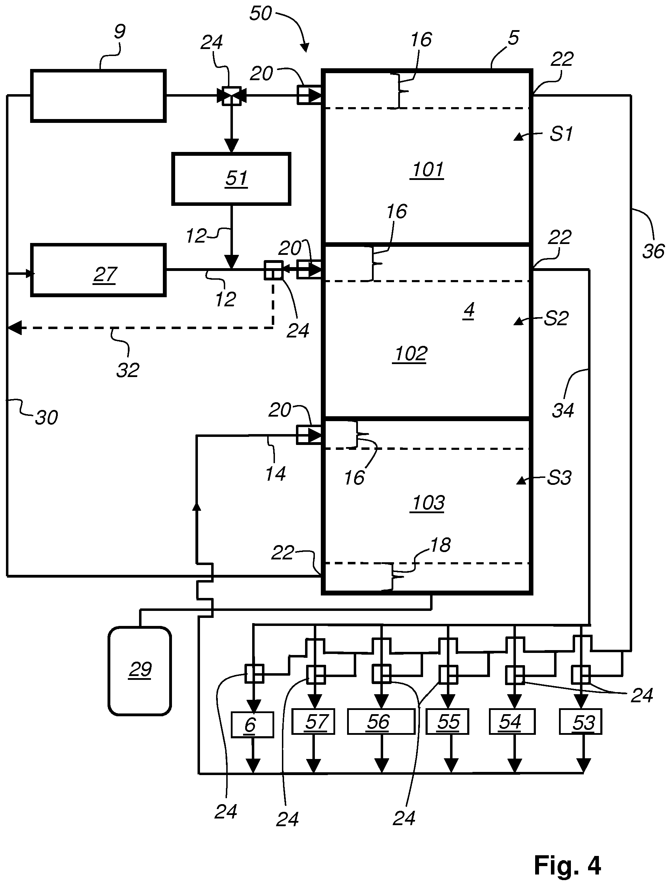

**Figur 4** zeigt eine Ausführungsform der erfindungsgemäßen Anordnung 1, die hier als Brauereianlage 50 schematisch dargestellt ist. Die Brauereianlage 50 ist mit einem Wärmespeicher 5 versehen. Der Wärmeerzeuger 9 ist dabei mit dem Wärmespeicher 5 verbunden. Mindestens ein rekuperativer Wärmetauscher 27, hier der Pfannendunstkondensator 52 ist über den Rücklauf 12 mit dem Wärmespeicher 5 kommunikativ verbunden. Eine Würzekoch- und/oder Würzeheißhalteeinrichtung 51, insbesondere einer Würzepfanne (alternativ können beispielhaft auch kombinierte Maisch-/ Würzepfannen, Whirlpoolpfannen oder Heißhaltestrecken in Frage kommen). Eine Heißhaltestrecke kommt insbesondere bei kontinuierlichen Würzekoch- und/oder Würzeheißhalteverfahren in Betracht. Ein Läuterwürzeerhitzer 53, eine Maischbottichpfanne 54, ein Maischbottich 55, eine Flaschenreinigungsmaschine 56, eine CIP-Anlage 57 und weitere zweite Wärmeverbraucher 6 sind über die entsprechend zugeordneten Rückläufe 12 bzw. 14 der den Elementen jeweils zugeordneten Wärmetauschern (hier nicht dargestellt) kommunikativ verbunden. Bei der hier dargestellten Ausführungsform ist der Würzekoch- und/oder Würzeheißhalteeinrichtung 51 vorzugsweise ein Mischventil 24 vorgeschaltet, so dass dem Wärmetauscher (hier nicht dargestellt) der Würzekoch- und/oder Würzeheißhalteeinrichtung 51 ein Speichermedium 4 aus dem Wärmeerzeuger 9 und/oder aus der oberen Schicht 101 des Wärmespeichers 5 zuführbar ist. Der Rücklauf der Würzekoch- und/oder Würzeheißhalteeinrichtung 51 und des Pfannendunstkondensators 52 sind über ein Belademittel 20 des Wärmespeichers 5 der Zwischenschicht 102 zuführbar. Dem Läuterwürzeerhitzer 53, der Maischbottichpfanne 54, dem Maischbottich 55, der Flaschenreinigungsmaschine 56, der CIP-Anlage 57 und weiteren zweiten Wärmeverbrauchern 6 ist jeweils ein Mischventil 24 vorgeschaltet, so dass den jeweiligen Elementen das Speichermedium 4 über die Entnahmestellen 22 aus der oberen Schicht 101 und/oder der Zwischenschicht 102 des Wärmespeichers 5 zuführbar ist. Die Rückläufe 14 der jeweiligen Elemente sind der unteren Schicht 103 des Wärmespeichers über ein Belademittel 20 zuführbar.

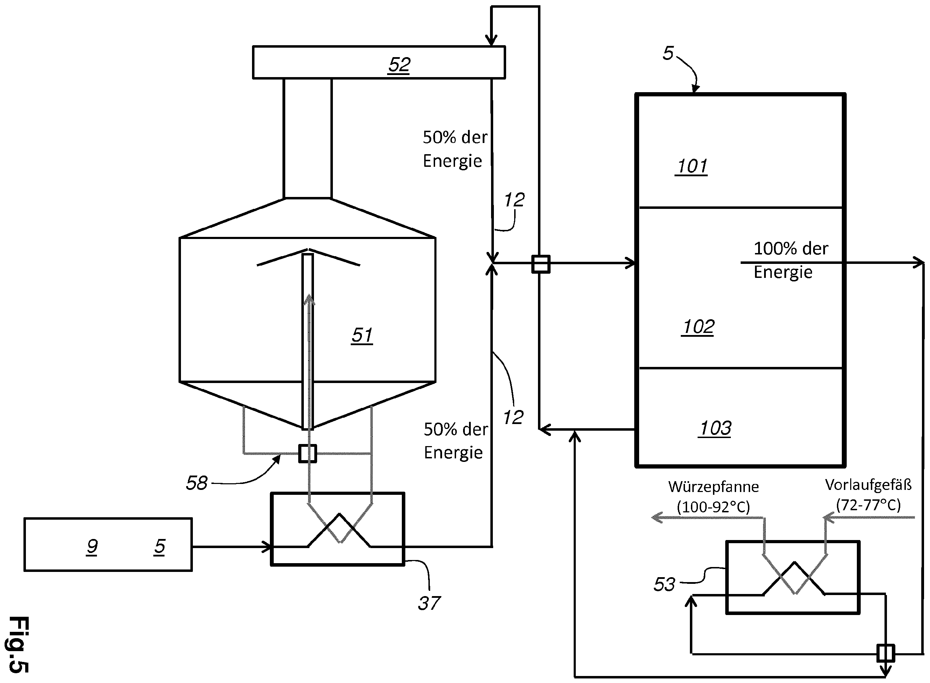

Wie aus der **Figur 5** ersichtlich ist, ist der Würzekoch- und/oder Würzeheißhalteeinrichtung 51 der Außenkocher 37 (Wärmetauscher) zugeordnet. Der Pfannendunstkondensator 52 ist mit der Würzekoch- und/oder Würzeheißhalteeinrichtung 51 verbunden. Bei der erfindungsgemäßen Brauereianlage 50 ist der Rücklauf 12 aus dem Außenkocher 27 der Würzekoch- und/oder Würzeheißhalteeinrichtung 51 und der Rücklauf 12 aus dem Pfannendunstkondensator 52 mit der Zwischenschicht 102 des Wärmespeichers 5 verbunden. Auch hier können in der Brauereianlage 50, wie in Figur 3 gezeigt, mehrere Sensoren 28 vorgesehen, die in Zusammenwirkung mit der Steuerung 40 die räumliche Ausdehnung der mindestens drei Schichten S1, S2, S3,...,SN ermitteln. Entsprechend dem Ermittlungsergebnis kann somit über die Steuerung 40 ein Zufluss über die Belademittel 20 und eine Entnahme an den Entnahmestellen 22 derart gesteuert werden, dass jede der Schichten S1, S2 und S3 mit den jeweils zugeordneten Belademitteln 20 bzw. den Entnahmestellen 22 verbunden bleibt. Dies ist wichtig, damit sich aufgrund des Befüllens des Wärmespeichers 5 bzw. der Entnahme aus dem Wärmespeicher 5 die diskreten Schichten S1, S2 und S3 nicht durchmischen bzw. in ihrer Lage und Ausdehnung nicht unwesentlich verändert werden. Ferner ist die Steuerung 40 vorzugsweise mit den Mischventilen 24 verbunden, um die Temperatur des Außenkochers 27 der Würzekoch- und/oder Würzeheißhalteeinrichtung 51, des Pfannendunstkondensators 52, des Läuterwürzeerhitzers 53, der Maischbottichpfanne 54, des Maischbottichs 55, der Flaschenreinigungsmaschine 56, der CIP-Anlage 57 und der weiteren zweiten Wärmeverbraucher 6 zugeführten Speichermediums 4 einzustellen.

Gemäß der erfindungsgemäßen Brauereianlage 50 kann somit auch die rekuperative Energie unter anderem aus dem Pfannendunstkondensator 52 und/oder einem Würzekühler (nicht dargestellt) und/oder einem Würzevorkühler (nicht dargestellt) und/oder einem Maischekühler (nicht dargestellt) gewonnen werden. Weiterhin kann auch die rekuperative Energie aus der Abwärme von Kompressoren (nicht dargestellt) und aus den biochemischen und thermischen Energiegehalt von Brauereireststoffen und ähnlichem gewonnen werden.

Figur 5 zeigt eine erfindungsgemäße Ausführungsform einer Energieschaukel, bestehend aus dem Pfannendunstkondensator 52 und der Würzekoch- und/oder Würzeheißhalteeinrichtung 51, sowie dem Läuterwürzeerhitzer 53 die so bei der erfindungsgemäßen Brauereianlage 50 Anwendung findet. Die Würzekoch- und/oder Würzeheißhalteeinrichtung 51 wird über einen Außenkocher 37 mit der für die Würzekochung und/oder Würzeheißhaltung erforderlichen Wärmeenergie versorgt. Im Zusammenhang mit der Würzekoch- und/oder Würzeheißhalteeinrichtung 51 wird ein Außenkocher 37 genannt, es versteht sich das die Erfindung nicht auf einen Außenkocher 37 beschränkt ist. Es können außerdem ein Innenkocher und/oder eine Boden- und/oder Zargenheizfläche zum Einsatz kommen.

Der Außenkocher 37 wird dabei mit dem erhitzten Speichermedium 4 aus dem Wärmeerzeuger 9 und/oder aus dem Wärmespeicher 5 versorgt. Der Wärmeinhalt des Speichermediums 4 wird im Außenkocher 37 an ein zur Würzekoch- und/oder Würzeheißhalteeinrichtung 51 führendes Leitungssystem 58 (welches mit Würze befüllt ist) abgegeben. Die aus dem Wärmeerzeuger 9 und/oder dem Wärmespeicher 5 kommende Temperatur des Speichermediums 4, welches zum Außenkocher37 geführt wird, soll dabei den Inhalt der Würzekoch- und/oder Würzeheißhalteeinrichtung 51 nahe der Kochtemperatur oder darüber hinaus erhitzen können.

Durch die Entkopplung dieser Energieschaukel kann trotz einer Reduzierung der Gesamtverdampfung bei der Würzekochung die gesamte Läuterwürze auf das notwendig hohe Temperaturniveau angehoben werden. Dabei wird weiterhin ein ausgeglichenes Energiekonzept ermöglicht. Da das Speichermedium 4 für die Aufheizung der Läuterwürze aus der Zwischenschicht 102 des Wärmespeichers 5 entnommen wird, ergibt sich der Vorteil, dass die Läuterwürze auf ein höheres Temperaturniveau gebracht werden kann als bei einer "klassischen" Verwendung der Energieschaukel zwischen Pfannendunstkondesator, Würzepfanne und Läuterwürzeerhitzer (siehe Beschreibung weiter unten). Ebenso wird die Belegungszeit in der Würzekoch- und/oder Würzeheißhalteeinrichtung 51 verkürzt. Ebenso führt eine Entkopplung dieser Energieschaukel zu einer höheren Variabilität in der Verfahrensweise bei der Würzekochung. Bei der bisher aus dem Stand der Technik bekannten Energieschaukel werden etwa 4% Gesamtverdampfung benötigt, um mit der Brüdenenergie aus der Würzekochung die komplette Läuterwürze auf etwa 92°C zu erhitzen.

Bei der erfindungsgemäßen Energieschaukel wird die Läuterwürze beispielhaft aus einem Vorlaufgefäß kommend in dem Läuterwürzeerhitzer 53 von beispielhaft 77°C auf 100°C aufgeheizt und der Würzekoch- und/oder Würzeheißhalteeinrichtung 51 zugeführt. Der Rücklauf aus dem Läuterwürzeerhitzer 53 der unteren Schicht 103 des Wärmespeichers 5 zugeführt. Von hier aus gelangt das Speichermedium 4 wiederum (mit einem definierten Temperaturinhalt) zum Pfannendunstkondensator 52. Im Pfannendunstkondensator 52 geht die Brüdenenergie aus der Würzekochung auf das Speichermedium 4 über. Der Rücklauf 12 aus dem Pfannendunstkondensator 52 und der Rücklauf aus dem Außenkocher37 der Würzekoch- und/oder Würzeheißhalteeinrichtung 51 werden der Zwischenschicht 102 des Wärmespeichers 5 zugeführt und ergeben zusammen die Energie- und Volumenmenge des Speichermediums 4, welche zur Erhitzung des nachfolgenden Sudes im Läuterwürzeerhitzer 53 benötigt wird.

Bisher wurden 4% Gesamtverdampfung benötigt, um aus der Brüdenenergie die bisher aus dem Stand der Technik bekannte Energieschaukel zu bedienen. Bei der in Figur 5 gezeigten erfindungsgemäßen Anordnung reichen nun 2% der Gesamtverdampfung aus der Würzekoch- und/oder Würzeheißhalteeinrichtung 51 aus (entspricht somit 50% der benötigten Energie), um die Energieschaukel zu bedienen, die übrigen 2% werden aus dem Energieinhalt des Rückflusses aus dem Außenkocher 37 der Würzekoch- und/oder Würzeheißhalteeinrichtung 51 gewonnen (entspricht somit 50% der benötigten Energie). Die oben genannte Verfahrensweise von jeweils 50% ist nur beispielhaft und soll der Verdeutlichung dienen. Es versteht sich das dieses Verhältnis und somit auch die Gesamtverdampfung variabel bestimmt werden kann.

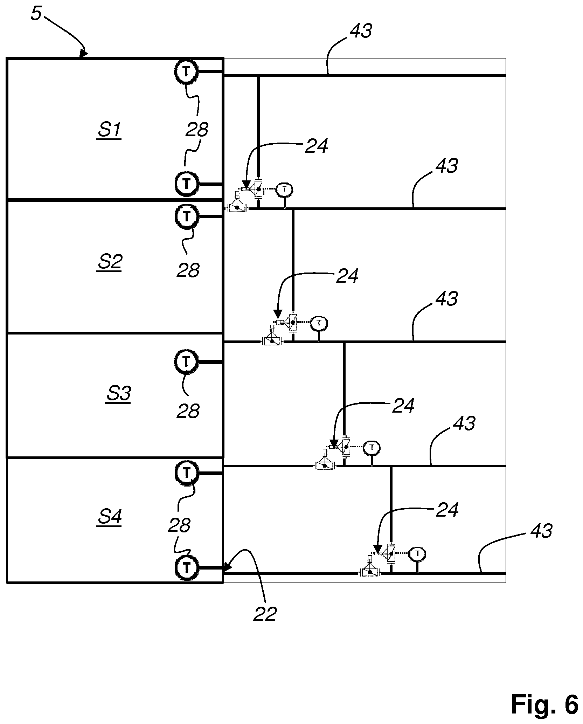

**Figur 6** zeigt eine weitere Ausführungsform des Wärmespeichers 5. Bei der hier dargestellten Ausführungsform umfasst der Wärmespeicher 5 vier Schichten S1, S2, S3 und S4, in denen das Speichermedium 4 in unterschiedlichen Temperaturbereichen eingelagert bzw. gespeichert ist.

Selbstverständlich könnte man alle Wärmeverbraucher 6 und 7 der Anordnung1 mit der oberen Schicht S1 versorgen. In diesem Fall müsste aber diese Schicht sehr groß sein und die Rückläufe 12, 14 von den Wärmeverbrauchern 6 und 7 hätten größtenteils ein hohes Temperaturniveau (zum Beispiel 80°C). Die Verluste bei der Wärmeerzeugung und Verteilung sind außerdem größer. Bei der in Figur 6 gezeigten Darstellung ist eine vorteilhafte Kaskadenschaltung zur Abwärtsmischung des Speichermediums 4 aus unterschiedlichen Temperaturen, die aus unterschiedlichen Schichten S1, S2, S3 und S4 kommen, gezeigt. Die aus der ersten Schicht S1 und der zweiten Schicht S2 führenden Leitungen 43 sind über ein Mischventil 24 miteinander gekoppelt. Ebenso ist die Leitung 43 aus der zweiten Schicht S2 mit einer Leitung 43 aus der dritten Schicht S3 über ein Mischventil 24 gekoppelt. Die Leitung 43 aus der dritten Schicht S3 ist mit einer Leitung 43 aus der vierten Schicht S4 über ein Mischventil 24 gekoppelt. Ebenso ist eine obere Leitung 43 aus der vierten Schicht S4 mit einer unteren Leitung 43 aus der vierten Schicht S4 über ein Mischventil 24 miteinander gekoppelt. Um zum Beispiel den Maischprozess mit thermischer Energie zu versorgen, wird das Speichermedium 4 (zum Beispiel Wasser) aus der vierten Schicht S4 des Wärmespeichers 5 auf ca. 80°C gemischt und zum Beispiel dem Würzekühler (nicht dargestellt) zugeführt. Am Würzekühler (nicht dargestellt) wird das Wasser auf ca. 95° C aufgeheizt und in die dritte Schicht S3 des Wärmespeichers 5 eingelagert. Alternativ und/oder zusätzlich kann auch dem Pfannendunstkondensator Speichermedium 4 aus der vierten Schicht S4 zugeführt werden, welches dann wiederum in der dritten Schicht S3 des Wärmespeichers 5 eingelagert wird. Aus der dritten Schicht S3 kann nun das Speichermedium 4 als Heizmedium dem Maischprozess zugeführt werden (somit wird eine Energieschaukel geschaffen). Die unterste Entnahmestelle 22 der vierten Schicht S4 dient als Reserveschicht beispielsweise für den Würzekühler, so dass immer eine genügend große Schicht mit vorzugsweise 80°C warmen Wasser im Wärmespeicher 5 vorhanden ist, um die hochwertige Energie beim Würzekühlen zu rekuperieren. Die so rekuperierte Energiemenge wird beispielsweise wie bereits erwähnt, am Maischbottich (nicht dargestellt) zum Aufheizen der Maische genutzt. In der ersten Schicht S1 wird das Speichermedium 4 mit einer Temperatur von ca. 115°C vorgehalten und zur Versorgung der Würzekochung eingesetzt. Der Rücklauf des Außenkochers, der ca. 105°C aufweist, wird in die zweite Schicht S2 eingelagert und für eine anschließende Erhitzung der Läuterwürze eingesetzt. Der Rücklauf des Läuterwürzeerhitzers beträgt ca. 80°C und wird in die vierte Schicht S4 eingelagert. Eine ähnliche Verschaltung und Nutzung der Temperaturbereiche in den einzelnen Schichten S1, S2, S3, S4 des Wärmespeichers 5 kann auch mit weiteren Verbrauchern und Wärmeerzeugern erzielt werden.

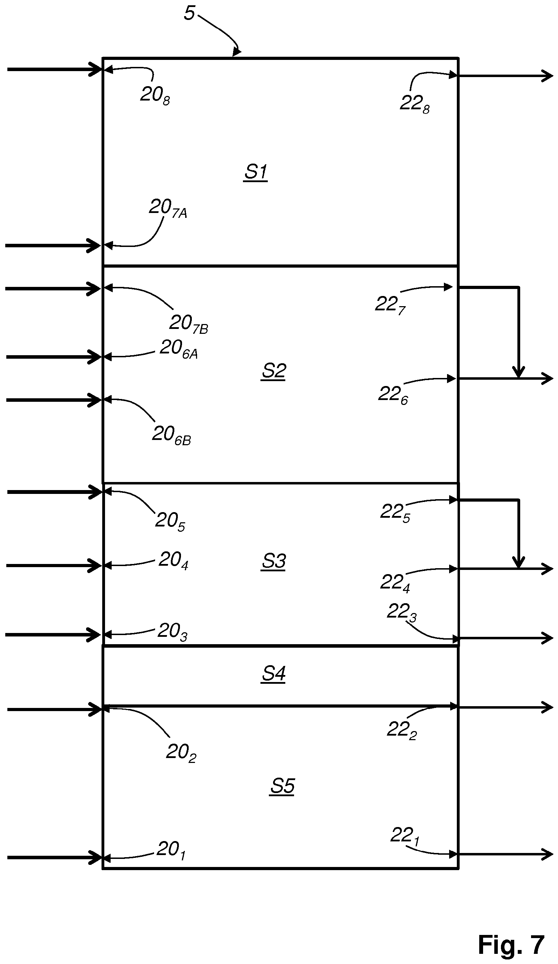

**Figur 7** zeigt eine weitere Ausführungsform des Wärmespeichers 5, der bei der erfindungsgemäßen Anordnung 1 eingesetzt wird. Der Wärmespeicher 5 besteht dabei aus fünf Schichten S1, S2, S3, S4 und S5. In der ersten Schicht S1 liegt das Speichermedium 4 beispielsweise mit einer Temperatur von 115°C vor. In der zweiten Schicht S2 liegt das Speichermedium 4 mit einer Temperatur von > 105°C vor. In der dritten Schicht S3 liegt das Speichermedium 4 mit einer Temperatur von >95°C vor. In der vierten Schicht S4 und der fünften Schicht S5 liegt das Speichermedium 4 jeweils mit einer Temperatur von >= 75°C vor. In der fünften Schicht S5 wird dabei zu jedem Zeitpunkt das Speichermedium 4 mit einer Temperatur von >= 75°C vorgehalten. Es handelt sich bei dieser Ausgestaltung lediglich um eine beispielhafte Ausführung, so dass prinzipiell auch eine Schicht ausreichen würde, in der das Speichermedium 4 mit einer Temperatur von >= 75°C vorgehalten wird.

Bei dem hier gezeigten Wärmespeicher 5 dient die Einschichtstelle 20s zum Einlagern des 115°C warmen Speichermediums 4, das vom Wärmeerzeuger 9 (nicht dargestellt) kommt. Die Entnahmestelle 22s der ersten Schicht S1 dient zum Auslagern des ca. 115°C heißen Speichermediums 4 zu den Hochtemperaturverbrauchern. Die Einschichtstellen 20_{7A} der ersten Schicht 1 und die Einschichtstelle 20_{7B} der zweiten Schicht S2 dienen zum Einlagern des 105°C warmen Speichermediums 4, das z. B. vom Rücklauf der Würzekoch- und/oder Würzeheißhalteeinrichtung 51 kommt. Die Entnahmestelle 22₇ der zweiten Schicht S2 dient zum Auslagern des 105°C warmen Speichermediums 4 zum Läuterwürzeerhitzer 53 und zur Flaschenreinigungsmaschine 56. Die Einschichtstelle 20_{6A} und 20_{6B} der zweiten Schicht S2 dienen als Reserveeinschichtstellen. Ebenso dient die Entnahmestelle 22₆ als Reserveentnahmestelle. Dies kann notwendig werden, falls sich die erste Schicht S1 in ihrem Volumen in axialer Richtung des Wärmespeichers 5 vergrößert, so dass damit letztendlich die Einlagerung über die Einschichtstellen 20_{6A} bzw. 20_{6B} und die Auslagerung über die Entnahmestelle 22₆ erfolgen muss.

Die Einschichtstelle 20₅ der dritten Schicht S3 dient zum Einlagern des rekuperativ erzeugten 95°C warmen Speichermediums 4 aus der Würzekühlung und des Pfannendunstkondensators 52. Die Entnahmestelle 22₅ dient zum Auslagern des 95°C warmen Speichermediums 4 zu den Maischgefäßen. Die Einschichtstelle 20₄ dient zum Einlagern des Rücklaufs von den Maischgefäßen, falls die Temperatur des Speichermediums 4 den Sollwert überschreitet und nicht in die Einschichtstelle 20₃ oder 20₁ eingelagert werden kann. Die Entnahmestelle 22₄ ist eine Reserveentnahmestelle für die Entnahmestelle 22₅ und wird dann verwendet, falls die erste Schicht mit dem 115°C heißen Speichermedium 4 vergrößert werden soll. Die Einschichtstelle 20₃ dient zum Einlagern des Rücklaufs der Maischgefäße, falls die Rücklauftemperatur zu gering ist, um in die Einschichtstelle 20₄ geführt zur werden.

Die Entnahmestelle 22₂ dient zur Entnahme von 80 °C warmen Speichermediums 4, um dieses zum Wärmeerzeuger 9 zu führen. Ebenso dient die Einschichtstelle 20₂ zum Einlagern des Rücklaufs aus der Flaschenreinigungsmaschine 56 (siehe Fig. 3). Die Entnahmestelle 22₁ dient zur Entnahme von 80°C warmen Speichermediums 4 zur Rekuperation der Energie am Würzekühler und am Pfannendunstkondensator 52 (siehe Fig. 3). Die Einschichtstelle 20₁ dient zum Einlagern des Rücklaufs vom Läuterwürzeerhitzer 53, den Maischgefäßen und der CIP-Anlage 57 (siehe Fig. 3) bzw. dessen Wärmetauscher 27. Die in der Beschreibung zu Figur 7 erwähnten Einschichtstellen können ebenfalls mit mindestens einer Lanze verschaltet werden.

Wenn in den vorstehenden Figuren beispielhaft von Entnahmestelle 22 und Einschichtstelle 20 auf gleicher Schichthöhe des Wärmespeichers 5 gesprochen wird, kann es sich hierbei auch um eine kombinierte Entnahme- und Einschichtstellen handeln, wie z.B. einer Schichtladelanze.

Die erfindungsgemäße Anordnung ist bei einer Brauereianlage 50 derart ausgestaltet, dass ein Wärmespeicher 5, mit einem Wärmerzeuger 9, mindestens einem rekuperativen Wärmetauscher 27 und einer Würzekoch- und/oder Würzeheißhalteeinrichtung 51, über mindestens einen Rücklauf 12 verbunden ist. Der Würzekoch- und/oder Würzeheißhalteeinrichtung 51 ist ein Speichermedium 4 aus dem Wärmerzeuger 9 und/oder aus einer oberen Schicht 101 des Wärmespeichers 5 zuführbar. Der Rücklauf 12 der Würzekoch- und/oder Würzeheißhalteeinrichtung 51 ist einer Zwischensicht 102 des Wärmespeichers 5 über ein Belademittel 20 zuführbar. Der Brauereianlage 50 kann zusätzlich zumindest ein Element aus der Gruppe von: Maischbottichpfanne 54, Maischbottich 55, Flaschenreinigungsmaschine 56, ein Läuterwürzeerhitzer 53, eine CIP-Anlage 57 und weitere zweite Wärmeverbraucher 6 zugeordnet sein. Dadurch kann Speichermedium 4 über Entnahmestellen 22 aus der oberen Schicht 101 und/oder der Zwischensicht 102 des Wärmespeichers 5 der Elemente der vorgenannten Gruppe zuführt werden. Die Rückläufe 14 der Elemente der vorgenannten Gruppe können der unteren Schicht 103 des Wärmespeichers 5 über das Belademittel 20 zuführt werden.

Zwischen der oberen Schicht 101 und der unteren Schicht 103 kann im Wärmespeicher 5 ein Temperaturbereich von 150°C bis 70°C vorherrschen. Die obere Schicht 101 weist ein Temperaturniveau von 105°C bis 130°C, bevorzugt von 105°C bis 120°C auf. Die Zwischenschicht 102 weist ein Temperaturniveau von 90°C bis mindestens zur Siedetemperatur des Speichermediums 4, bevorzugt von 95°C bis 98°C, auf. Die untere Schicht 103 weist ein Temperaturniveau unter 90°C, bevorzugt von 75°C bis 85°C auf.

Der Würzekoch- und/oder Würzeheißhalteeinrichtung 51 ist der rekuperative Wärmetauscher 27 zugeordnet. Der Rücklauf 12 aus dem rekuperativen Wärmetauscher 27 und der Rücklauf 12 der Würzekoch- und/oder Würzeheißhalteeinrichtung 51 sind mit der Zwischenschicht 102 des Wärmespeichers 5 verbunden.

Die Brauereianlage 50 ist mit einer Steuerung 40 versehen, die mit Sensoren 28 verbunden ist, die die räumliche Ausdehnung der mindestens drei Schichten S1, S2, S3 ermitteln und einen Zufluss über die Belademittel 20 und eine Entnahme an Entnahmestellen 22 steuern, so dass jede der Schichten S1, S2, S3 mit den jeweils zugeordneten Belademitteln 20 bzw. den Entnahmestellen 22 verbunden bleibt. Die Steuerung 40 ist ebenfalls mit den Mischventilen 24 verbunden, um die Temperatur des Speichermediums 4 einzustellen, das zumindest einem der Elemente aus der Gruppe von Würzekoch- und/oder Würzeheißhalteeinrichtung 51, Läuterwürzeerhitzer 53, Maischbottichpfanne 54, Maischbottich 55, Flaschenreinigungsmaschine 56, CIP-Anlage 57 und weiteren zweiten Wärmeverbrauchern 6 zuführbar ist.

Die Erfindung wurde unter Bezugnahme auf bevorzugte Ausführungsbeispiele beschrieben. Es ist jedoch für einen Fachmann selbstverständlich, dass Abwandlungen und Änderungen gemacht werden können, ohne dabei den Schutzbereich der nachstehenden Ansprüche zu verlassen.

### Bezugszeichenliste

- 1: Anordnung
- 4: Speichermedium
- 5: Wärmespeicher
- 6: zweite Wärmeverbraucher
- 7: erster Wärmeverbraucher (Hochtemperaturverbraucher)
- 9: Wärmeerzeuger
- 10₁, 10₂, 10₃,...,10_{N}: Wärmeverbraucher
- 11: Leitung
- 12: Rücklauf
- 14: Rücklauf
- 16: oberer Bereich
- 18: unterer Bereich
- 20: Belademittel
- 20₁ - 20₈: Einschichtstelle
- 22: Entnahmestelle
- 22₁ - 22₈: Entnahmestelle
- 24: Mischventil
- 25: Pumpe
- 26: Öffnung
- 27: rekuperativer Wärmetauscher
- 28: Sensor
- 29: Druckausgleichsbehälter
- 30: Leitung
- 32: Leitung
- 34: Leitung
- 36: Leitung
- 37: Außenkocher
- 40: Steuerung
- 43: Leitung
- 50: Brauereianlage
- 51: Würzekoch- und/oder Würzeheißhalteeinrichtung
- 52: Pfannendunstkondensator
- 53: Läuterwürzeerhitzer
- 54: Maischbottichpfanne
- 55: Maischbottich
- 56: Flaschenreinigungsmaschine
- 57: CIP-Anlage
- 58: Leitungssystem
- 101: obere Schicht
- 102: Zwischenschicht
- 103: untere Schicht
- S1, S2,..., SN: diskrete Schichten des Speichermediums

## Patentansprüche

1. Anordnung (1) zur Wärmespeicherung in einer Anlage zur Getränkeherstellung, insbesondere Brauereianlage, mit mindestens einem Wärmespeicher (5) mit einem Speichermedium (4) und mehreren Wärmeverbrauchern (10₁, 10₂, 10₃,...,10_{N}), die mit dem Wärmespeicher (5) zur Einspeisung und/oder Entnahme von Wärmenergie verbunden sind, und das Speichermedium (4) im Wärmespeicher (5) in mehrere Schichten (S1, S2, S3, ..., SN) mit jeweils unterschiedlichen Temperaturbereichen gespeichert ist,
**dadurch gekennzeichnet, dass**
im Wärmespeicher (5) mindestens drei diskrete Schichten (S1, S2, S3, ..., SN) vorhanden sind und der Wärmespeicher (5) derart ausgebildet ist, dass jeder der mindestens drei diskreten Schichten (S1, S2, S3,...,SN) mindestens eine Einschichtstelle (20) zum temperaturabhängigen Einschichten im jeweiligen Temperaturbereich zugeordnet ist und jeder der mindestens drei diskreten Schichten (S1, S2, S3,...,SN) mindestens eine Entnahmestelle (22) zum Auslagern aus dem Wärmespeicher zugeordnet ist.

2. Anordnung nach Anspruch 1, wobei eine Steuerung (40) vorgesehen ist, die kommunikativ mit mindestens einem Sensor (28) verbunden ist, so dass die räumliche Ausdehnung, der mindestens drei Schichten (S1, S2, S3) ermittelbar und einen Zufluss über die Einschichtstellen (20) und eine Entnahme an den Entnahmestellen (22) derart steuerbar ist, dass jede der Schichten (S1, S2, S3) mit den jeweils zugeordneten Einschichtstellen (20) bzw. den Entnahmestellen (22) verbunden bleibt.

3. Anordnung nach Anspruch 2, wobei die Steuerung (40) kommunikativ mit mindestens einem Mischventil (24) verbunden ist.

4. Anordnung nach einem der Ansprüche 2 oder 3, wobei in Leitungen (36, 34) von den Entnahmestellen (22) zu den jeweiligen Mischventilen (24) eines jeden zweiten Wärmeverbrauchers (6), in einer Leitung (14) von den zweiten Wärmeverbrauchern (6), in einer Leitung (30) zu einem Wärmeerzeuger (9), in einer Leitung (32), die von einem dem ersten Wärmeverbraucher nachgeordneten Mischventil (24) wegführt und zwischen dem Wärmeerzeuger (9) und einem einer Einschichtstelle (20) vorgeordneten Mischventil (24) jeweils eine Pumpe (25) vorgesehen ist und wobei die Pumpen (25) ebenfalls mit der Steuerung kommunikativ verbunden sind.

5. Anordnung (1) nach einem der vorangehenden Ansprüche, wobei die Einschichtstellen durch mindestens ein Belademittel (20) definiert sind, und das Belademittel (20) mindestens eine Lanze umfasst.

6. Anordnung (1) nach einem der vorangehenden Ansprüche, wobei eine Entnahmestelle (22) in der unteren Schicht (103) des Wärmespeichers (5) vorgesehen ist, die über die Leitung (30) mit dem Wärmeerzeuger (9) verbunden ist und wobei der Rücklauf (12) des mindestens einen, ersten Wärmeverbrauchers (7) und/oder mindestens einem rekuperativen Wärmetauscher (27, 52) und/oder die Zwischenschicht (102) mit einem Mischventil (24), über eine Leitung (32) mit der Leitung (30) verbunden sind.

7. Anordnung (1) nach einem der vorangehenden Ansprüche, wobei eine Entnahmestelle (22) in der oberen Schicht (101) über die Leitung (36) und eine Entnahmestelle (22) in der Zwischenschicht (102) über eine Leitung (34) mit jeweils einem Mischventil (24) verbunden sind, das zumindest mit mindestens einem der zweiten Wärmeverbraucher (6) vorgeschaltet ist.

8. Anordnung (1) nach einem der vorangehenden Ansprüche, wobei der mindestens eine erste Wärmeverbraucher (7) und mindestens ein rekuperativer Wärmetauscher (27) vorgesehen sind, mit deren Rücklauf (12) gemeinsam die Zwischensicht (102) beladbar ist.

9. Anordnung (1) nach Anspruch 8, wobei der erste Wärmeverbraucher (7) eine Würzekoch- und/oder Würzeheißhalteeinrichtung (51) ist, dem ein Außenkocher (37) als Wärmetauscher zugeordnet ist und ein zweiter Wärmeverbraucher ein Läuterwürzeerhitzer (53) ist, wobei der Rücklauf (12) aus dem Außenkocher (37) und Läuterwürzeerhitzer (53) mit der Zwischenschicht (102) des Wärmespeichers (5) verbunden ist und wobei mindestens der Rücklauf (12) aus dem Pfannendunstkondensator (52) mit der Zwischenschicht (102) des Wärmespeichers (5) verbunden ist.

10. Verfahren zum Be- und Entladen eines Wärmespeichers (5) in einem Getränkeherstellungsprozess,
**gekennzeichnet durch die folgenden Schritte:**
• dass mindestens ein Sensor (28) mit einer Steuerung (40) kommunikativ verbunden wird und mit dem mindestens einen Sensor (28) eine räumliche Ausdehnung bzw. eine Schichtdicke, einer jeden von mindestens drei diskreten Schichten (S1, S2 und S3) im Wärmespeicher (5) ermittelt und an die Steuerung (40) übermittelt wird;
• dass mindestens eine Pumpe (25), die mindestens einer Entnahmestelle (22) und mindestens eine Einschichtstelle (20) zugeordnet ist, mit der Steuerung (40) kommunikativ verbunden wird; und
• dass die Steuerung (40) ein Beladen über die mindesten eine Einschichtstelle (20) und ein Entnehmen an den Entnahmestellen (22) über die mindestens eine Pumpe (25) derart steuert, dass jede der mindestens drei diskreten Schichten (S1, S2, S3) mit den jeweils zugeordneten Einschichtstellen (20) bzw. den Entnahmestellen (22) verbunden bleibt.

11. Verfahren nach Anspruch 10, wobei mindestens ein Mischventil (24) mit der Steuerung (40) kommunikativ verbunden wird, und über die mindestens eine Pumpe (25) und das mindestens eine Mischventil (24) das Be- und Entladen derart gesteuert werden, dass jede der mindestens drei diskreten Schichten (S1, S2, S3) mit den jeweils zugeordneten Einschichtstellen (20) bzw. den Entnahmestellen (22) verbunden bleibt.

12. Verfahren nach einem der Ansprüche 10 bis 11, umfassend die weiteren Schritte:
• Beladen eines Wärmespeichers (5) aus einem laufenden Getränkeherstellungsprozess mit einem Speichermedium (4), so dass im Wärmespeicher (5) mindestens drei diskrete Schichten (S1, S2, S3) ausgebildet werden, die sich hinsichtlich der Temperaturbereiche unterscheiden, wobei eine obere Schicht (101) mit einem Speichermedium (4) eines ersten Temperaturniveaus von einem Wärmeerzeuger (9), eine Zwischenschicht (102) mit einem Speichermedium (4) eines zweiten Temperaturniveaus aus dem mindestens einem Rücklauf (12) mindestens eines ersten Wärmeverbrauchers (7) und eine untere Schicht (103) mit einem Speichermedium (4) eines dritten Temperaturniveaus aus mindestens einem Rücklauf (14) eines mindestens zweiten Wärmeverbrauchers (6) gezielt beladen wird;
• Entnehmen des Speichermediums (4) aus der unteren Schicht (103) und/oder einer Zwischenschicht (102) und Zuführen des Speichermediums (4) aus der unteren Schicht (103) zum Wärmerzeuger (9); so dass mit dem Wärmerzeuger (9) das Speichermedium (4) aus der unteren Schicht (103) auf das erste Temperaturniveau angehoben und der oberen Schicht (101) zugeführt wird;
• Entnehmen des Speichermediums (4) entweder aus der oberen Schicht (101) und/oder Entnehmen des Speichermediums (4) aus der Zwischensicht (102), das jeweils mindestens einem zweiten Wärmeverbraucher (6) zugeführt wird;
• Zuführen des Speichermediums (4) aus mindestens einem Rücklauf (14) des mindestens zweiten Wärmeverbrauchers (6) zu der unteren Schicht (103) des Wärmespeichers (5); und
• Zuführen des Speichermediums (4) aus dem mindestens einen Rücklauf (12) des mindestens ersten Wärmeverbrauchers (7) zu der Zwischenschicht (102) des Wärmespeichers (5).

13. Verfahren nach Anspruch 12, wobei über eine der oberen Schicht (101) zugeordnete Einschichtstelle (20) ein Speichermedium (4) aus dem Wärmeerzeuger (9) der oberen Schicht (101) zugeführt wird und über die Einschichtstelle (20) aus der oberen Schicht (101) und/oder aus dem Wärmerzeuger (9) das Speichermedium (4) dem ersten Wärmeverbraucher (7) zugeführt wird.

14. Verfahren nach Anspruch 13, wobei mindestens ein rekuperativer Wärmetauscher (27) vorgesehen ist und das Speichermedium (4) im Rücklauf (12) des ersten Wärmeverbrauchers (7) und des mindestens einen rekuperativen Wärmetauschers (27) mit dem Belademittel (20) der Zwischenschicht (102) zugeführt wird.

15. Verfahren nach den Ansprüchen 12 bis 14, wobei das dem ersten Wärmeverbraucher (7) zugeordnete Mischventil (24) und die Pumpe (25) mittels der Steuerung (40) gesteuert werden, dass dem ersten Wärmeverbraucher (7) das Speichermedium (4) aus dem Wärmeerzeuger (9) und/oder aus der oberen Schicht (101) zugeführt wird; wobei ein jedes einem jeden zweiten Wärmeverbraucher (6) zugeordnetes Mischventil (24) und eine Pumpe (25) mittels der Steuerung (40) gesteuert werden, dass einem jeden zweiten Wärmeverbraucher (6) das Speichermedium (4) aus der Zwischenschicht (102) und bei Bedarf aus der oberen Schicht (101) zugeführt wird und so die Temperatur des zugeführten Speichermediums (4) nach Bedarf des jeweiligen zweiten Wärmeverbrauchers (6) eingestellt werden kann und wobei ein im Rücklauf (12) des ersten Wärmeverbrauchers (7) und eines rekuperativen Wärmetauschers (27) vorgesehenes Mischventil (24) und eine Pumpe (25) mittels der Steuerung (40) derart gesteuert wird, dass über eine Leitung (32) und einer zum Wärmerzeuger (9) führenden Leitung (30) das Speichermedium (4) aus dem Rücklauf (12) und/oder aus der Zwischenschicht (102) dem Wärmerzeuger (9) zugeführt wird und so die Temperatur des zugeführten Speichermediums (4) nach Bedarf für den Wärmeerzeuger (9) eingestellt werden kann.

## Claims

1. An arrangement (1) for the storage of heat in a beverage production plant, in particular, a brewery plant, comprising at least one heat storage (5) with a storage medium (4) and a plurality of heat consumers (10₁, 10₂, 10₃, ..., 10_{N}), which are connected to the heat storage (5) for supplying and/or removing heat energy, the storage medium (4) in the heat storage (5) being stored in a plurality of layers (S1, S2, S3, ..., SN), each having different temperature ranges,
**characterized in that**
at least three discrete layers (S1, S2, S3, ..., SN) are present in the heat storage (5) and the heat storage (5) is configured in such a manner, that at least one sending-in position (20) for the temperature-dependent stratifying in the respective temperature range is assigned to the at least three discrete layers (S1, S2, S3, ..., SN) and at least one extraction site (22) for removal from the heat storage (5) is assigned to each of the at least three discrete layers (S1, S2, S3, ..., SN).

2. The arrangement according to claim 1, wherein a controller (40) is provided, which is communicatively connected to at least one sensor (28), so that the spatial extent of the at least three layers (S1, S2, S3) can be determined and an inflow over the sending-in positions (20) and a removal over the extraction sites (22) can be controlled in such a way, that each of the layers (S1, S2, S3) remains connected to the respectively assigned sending-in position (20) and extraction sites (22).

3. The arrangement according to claim 2, wherein the controller (40) is communicatively connected to at least one mixing valve (24).

4. The arrangement according to one of the claims 2 or 3, wherein in lines (36, 34) from the extraction sites (22) to the respective mixing valves (24) of each second heat consumer (6), in a line (14) of the second heat consumers (6), in a line (30) to a heat generator (9), in a line (32) leading away from a mixing valve (24) downstream of the first heat consumer and between the heat generator (9) and a mixing valve (24) upstream of a sending-in position (20) each having a pump (25), is provided and wherein the pumps (25) are also communicatively connected to the controller.

5. The arrangement (1) according to one of the preceding claims, wherein the sending-in positions are defined by at least one loading means (20) and the loading means (20) comprises at least one lance.

6. The arrangement (1) according to one of the preceding claims, wherein an extraction site (22) in the lower layer (103) of the heat storage (5) is provided, which is connected via the line (30) with the heat generator (9), and wherein the return line (12) of the at least one first heat consumer (7) and/or at least one recuperative heat exchanger (27, 52) and/or the intermediate layer (102) are connected to a mixing valve (24) via a line (32) to the line (30).

7. The arrangement (1) according to one of the preceding claims, wherein an extraction site (22) in the upper layer (101) via the line (36) and an extraction site (22) in the intermediate layer (102) via a line (34) each is connected to a respective mixing valve (24), which is connected upstream of at least one of the second heat consumer (6).

8. The arrangement (1) according to one of the preceding claims, wherein the at least one first heat consumer (7) and at least one recuperative heat exchanger (27) are provided, with the return line (12) of which the intermediate layer (102) can be loaded jointly.

9. The arrangement (1) according to claim 8, wherein the first heat consumer (7) is a wort boiling and/or wort hot-holding device (51), to which an outer boiler (37) is assigned as a heat exchanger, and a second heat consumer is a lautering wort heater (53), the return line (12) from the external boiler (37) and the lautering wort heater (53) are connected to the intermediate layer (102) of the heat storage (5), and at least the return unit (12) from the vapor condenser (52) is connected with the intermediate layer (102) of the heat storage (5).

10. A method for loading and unloading a heat storage (5) in a beverage production process,
**characterized by the following steps:**
• in that at least one sensor (28) is communicatively connected to a controller (40) and that a spatial extent or a layer thickness of each of at least three discrete layers (S1, S2, S3) in the heat storage (5) is determined with the at least one sensor (28) and transmitted to the controller (40);
• that at least one pump (25), which is assigned to at least one extraction site (22) and at least one sending-in position (20), is communicatively connected to the controller (40); and
• in that the controller (40) controls loading via the at least one sending-in position (20) and removal at the extraction site (22) via the at least one pump (25) in such a manner, that each of the at least three discrete layers (S1, S2, S3) remains connected with the respectively assigned sending-in positions (20) and the extraction sites (22).

11. The method according to claim 10, wherein at least one mixing valve (24) is connected communicatively with the controller (40) and, via the at least one pump (25) and via the at least one mixing valve (24), the loading and unloading are controlled in such a manner, that each of the at least three discrete layers (S1, S2, S3) remains connected with the respectively assigned sending-in positions (20) or the extraction sites (22).

12. The method according to one of the claims 10 to 11, comprising the further steps of
• loading a heat storage (5) of a running beverage production process with a storage medium (4), so that at least three discrete layers (S1, S2, S3) are formed in the heat storage (5), which differ with respect to the temperature ranges, wherein an upper layer (101) is loaded selectively with a storage medium (4) from a first temperature level by a heat generator (9), an intermediate layer (102) is loaded selectively with a storage medium (4) of a second temperature level from the at least one return line (12) of the at least first heat consumer (7), and a lower layer (103) is loaded selectively with a storage medium (4) of a third temperature level from at least one return line (14) of at least a second heat consumer (6);
• removing the storage medium (4) from the lower layer (103) and/or an intermediate layer (102) and feeding the storage medium (4) from the lower layer (103) to the heat generator (9), so that, with the heat generator (9), the storage medium (4) from the lower layer (103) is raised to the first temperature level and supplied to the upper layer (101);
• removing the storage medium (4) from the upper layer (101) and/or the intermediate layer (102), each of which is supplied to at least a second heat consumer (6);
• supplying the storage medium (4) from at least one return line (14) of the at least second heat consumer (6) to the lower layer (103) of the heat storage (5); and
• supplying the storage medium (4) from the at least one return line (12) of the at least first heat consumer (7) to the intermediate layer (102) of the heat storage (5).

13. The method according to claim 12, wherein a storage medium (4) from the heat generator (9) is supplied to the upper layer (101) via a sending-in position (20) assigned to the upper layer (102), and the storage medium (4) is supplied via the sending-in position (20) from the upper layer (101) and/or from the heat generator (9) to the first heat consumer (7).

14. The method according to claim 13, wherein at least one recuperative heat exchanger (27) is provided, and the storage medium (4) in the return line (12) of the first heat consumer (7) and of the at least one recuperative heat exchanger (27) is supplied by the sending-in positions (20) to the intermediate layer (102).

15. The method according to one of the claims 12 to 14, wherein the mixing valve (24), assigned to the first heat consumer (7), and the pump (25), by means of the controller (40), are controlled, so that the storage medium (4) from the heat generator (9) and/or from the upper layer (101) is supplied to the first heat consumer (7);
wherein each mixing valve (24) and a pump (25), assigned to each second heat consumer (6), are controlled by means of the controller (40), so that the storage medium (4) from the intermediate layer (102) and, if necessary, from the upper layer (101) is supplied to each second heat consumer (6) and so that the temperature of the storage medium (4) supplied can be adjusted as required by the respective second heat consumer (6), and wherein a mixing valve (24) and a pump (25) are provided in the return line (12) of the first heat consumer (7) and a recuperative heat exchanger (27), the mixing valve (24) and the pump (25) are controlled by means of the controller (40) in such a manner, that via a line (32) and a line (30) leading to the generator (9), the storage medium (4) from the return line (12) and / or from the intermediate layer (102) is supplied to the heat generator (9) and the temperature of the storage medium (4) supplied can be adjusted in this manner as required by the heat generator (9).

## Revendications

1. Agencement (1) pour l'accumulation de chaleur dans une usine de fabrication de boissons, notamment dans l'usine brassicole, avec au moins un accumulateur de chaleur (5) avec un support de stockage (4) et plusieurs consommateurs de chaleur (10₁, 10₂, 10₃, ..., 10_{N}), qui sont connectés à l'accumulateur de chaleur (5) pour l'alimentation et/ou la suppression de l'énergie thermique, et le support de stockage (4) dans l'accumulateur de chaleur (5) stocké en plusieurs couches (S1, S2, S3, ..., SN) à différentes températures ambiantes,
**caractérisé par le fait**
**qu'**au moins trois couches discrètes (S1, S2, S3, ..., SN) sont présentes dans l'accumulateur de chaleur (5), celui-ci étant alors formé de telle sorte que chacune d'au moins ces trois couches discrètes (S1, S2, S3, ..., SN) est associée à au moins un site d'empilage (20) pour une stratification indépendante de la température dans la plage de température respective, et au moins chacune de ces trois couches discrètes (S1, S2, S3, ..., SN) est associée à au moins un site de retrait (22) pour le transfert de l'accumulateur de chaleur.

2. Agencement selon la revendication 1, dans lequel une commande (40) qui est connecté en communication à au moins un capteur (28), de telle sorte que l'étendue spatiale des au moins trois couches (S1, S2, S3) puisse être déterminée et un afflux sur les sites d'empilage (20) et un retrait au niveau des sites de retrait (22) puisse être contrôlée en maintenant chacune des couches (S1, S2, S3) connectée aux sites d'empilage respectifs (20) et aux sites de retrait (22).

3. Agencement selon la revendication 2, dans lequel la commande (40) est connectée en communication à au moins une vanne mélangeuse (24).

4. Agencement selon l'une des revendications 2 ou 3, où dans les conduits (36, 34) des sites de retrait (22) les vannes mélangeuses respectives (24) de chaque deuxième consommateur de chaleur (6), dans un conduit (14) des deuxièmes consommateurs de chaleur (6), dans un conduit (30) à une source de chaleur (9), dans un conduit (32) vers la source de chaleur (9), dans un conduit (32) qui sort de la vanne mélangeuse disposée à l'arrière du premier consommateur de chaleur (24), pour laquelle une pompe respective (25) est prévue entre la source de chaleur (9) et une des vannes mélangeuses (24) disposées à l'avant d'un des sites d'empilage (20) et dans laquelle les pompes (25) sont également connectées en communication à la commande.

5. Agencement (1) selon l'une des revendications susmentionnées, où les sites d'empilage sont définis par au moins un moyen de chargement (20) et le moyen de chargement (20) inclut au moins une lance.

6. Agencement (1) selon l'une des revendications susmentionnées, dans lequel un site de retrait (22) de la couche inférieure (103) de l'accumulateur de chaleur (5) est prévu et connecté par le conduit (30) avec la source de chaleur (9), et où le reflux (12) d'au moins un des premiers consommateurs de chaleur (7) et/ou au moins un échangeur de chaleur de récupération (27, 52) et/ou la couche intermédiaire (102) est connectée à une vanne mélangeuse (24) par un conduit (32) et avec un conduit (30).

7. Agencement (1) selon l'une des revendications susmentionnées, dans lequel un site de retrait (22) dans la couche supérieure (101) via le conduit (36) et un site de retrait (22) dans la couche intermédiaire (102) via un conduit (34), chacun est connecté à une vanne mélangeuse correspondante (24), qui est connecté au moins à au moins un des seconds consommateurs de chaleur (6).

8. Agencement (1) selon l'une des revendications susmentionnées, dans lequel au moins le premier consommateur de chaleur (7) et au moins un échangeur de chaleur de récupération (27) sont prévus et où leur reflux (12) et la couche intermédiaire (102) peuvent être ensemble chargés.

9. Agencement (1) selon la revendication 8, dans lequel le premier consommateur de chaleur (7) est un dispositif de cuisson de moût et/ou un dispositif de réchauffage de moût (51), auquel un cuiseur externe (37) est associé en tant que échangeur de chaleur, et où un deuxième consommateur de chaleur est un réchaud de moût de bière (53) connecté à la couche intermédiaire (102) de l'accumulateur de chaleur (5) et où le reflux (12) du condensateur au mica (52) est connecté à la couche intermédiaire (102) de l'accumulateur de chaleur (5).

10. Les procédures de chargement et de déchargement d'un accumulateur de chaleur (5) dans une procédure de fabrication de boissons
**se caractérisent par les étapes suivantes:**
• au moins un capteur (28) est connecté à une commande (40) et a une étendue spatiale avec au moins un capteur (28) ou une épaisseur d'au moins trois couches discrètes (S1, S2, S3) transmise à l'accumulateur de chaleur (5) et transmise à la commande (40);
• au moins une pompe (25) est connectée à au moins un site de retrait (22) et assignée à un site d'empilage (20), et connectée à la commande (40); et
• la commande (40) contrôle le chargement à au moins un site d'empilage (20) et un retrait aux sites de retrait (22) à travers une pompe (25), de telle sorte que chacune des trois couches discrètes (S1, S2, S3) reste connectée aux sites d'empilage respectifs (20) ou aux sites de retrait (22).

11. Procédé selon la revendication 10, dans lequel au moins une vanne mélangeuse (24) est connectée à la commande (40) et dont le chargement et déchargement sont contrôlés par au moins une pompe (25) et au moins une vanne mélangeuse (24), de telle sorte que chacune des trois couches discrètes (S1, S2, S3) reste connectée aux sites d'empilage respectifs (20) ou aux sites de retrait (22).

12. Procédé selon l'une des revendications 10 et 11, concernant les étapes suivantes:
• chargement d'un accumulateur de chaleur (5) à partir d'un procédé actuel de fabrication de boissons avec un support de stockage (4), afin qu'au moins trois couches discrètes (S1, S2, S3), distinctes des gammes de températures, soient formées dans l'accumulateur de chaleur (5), où une couche supérieure (101) est chargée avec un support de stockage (4) à un premier niveau de température d'une source de chaleur (9), une couche intermédiaire (102) est chargée avec un support de stockage (4) à un deuxième niveau de température d'au moins un reflux (12) d'au moins un consommateur de chaleur (7), et une couche inférieure (103) est chargée avec un support de stockage (4) à un troisième niveau de température d'au moins un reflux (12) d'au moins un deuxième consommateur de chaleur (6);
• Retrait du support de stockage (4) de la couche inférieure (103) et/ou d'une couche intermédiaire (102) et connexion du support de stockage (4) de la couche inférieure (103) à la source de chaleur (9), de telle sorte qu'il soit connecté avec la source de chaleur (9) du support de stockage (4) de la couche inférieure (103) au premier niveau de température et à la couche supérieure (101);
• Alimentation du support de stockage (4) d'au moins un reflux (14) d'au moins un deuxième consommateur de chaleur (6) à la couche inférieure (103) de l'accumulateur de chaleur (5); et
• Alimentation du support de stockage (4) depuis au moins un reflux (12) d'au moins le premier consommateur de chaleur (7) à la couche intermédiaire (102) de l'accumulateur de chaleur (5).

13. Procédé selon la revendication 12, dans lequel le site d'empilage (20) est connecté au support de stockage (4) d'une source de chaleur (9) de la couche supérieure (101) par une couche supérieure (102) et/ou le support de stockage (4) est connecté de la source de chaleur (9) au premier consommateur de chaleur (7).

14. Procédé selon la revendication 13, dans lequel au moins un échangeur de chaleur de récupération (27) est prévu et le support de stockage (4) est connecté au reflux (12) du premier consommateur de chaleur (7) et dans lequel au moins un échangeur de chaleur de récupération (27) est connecté au moyen de chargement (20) de la couche intermédiaire (102).

15. Procédé selon les revendications 12 à 14, dans lequel la vanne mélangeuse (24) et la pompe (25) attribuées au premier consommateur de chaleur (7) sont contrôlées par la commande (40), de telle sorte que le premier consommateur de chaleur (7) soit connecté au support de stockage (4) de la source de chaleur (9) et/ou de la couche supérieure (101),
procédé dans lequel la vanne mélangeuse (24) et la pompe (25) attribuées au deuxième consommateur de chaleur (6) au moyen de la commande (40) sont contrôlées, de telle sorte que chaque deuxième consommateur de chaleur (6) soit connecté au support de stockage (4) de la couche intermédiaire (102) et, au besoin, de la couche supérieure (101), pouvant ainsi régler la température du support de stockage raccordé (4) en fonction du deuxième consommateur de chaleur (6); et dans lequel une vanne mélangeuse (24) et une pompe (25) prévues au reflux (12) du premier consommateur de chaleur (7) et à un échangeur de chaleur de récupération (27) sont contrôlées, connectées au support de stockage (4) du reflux (12) et/ou de la couche intermédiaire par un conduit (32) et par un conduit (30) menant à une source de chaleur (9), et permettant ainsi à la température du support de stockage raccordé (4) d'être réglée selon les besoins de la source de chaleur (9).
